(19) Europäisches Patentamt / European Patent Office / Office européen des brevets

(11) **EP 4 286 842 A1**

(12) **EUROPEAN PATENT APPLICATION**

(43) Date of publication:
**06.12.2023  Bulletin 2023/49**

(21) Application number: **22176471.5**

(22) Date of filing: **31.05.2022**

(51) International Patent Classification (IPC):
**G01N 30/86** (2006.01)    **G06N 3/00** (2023.01)
**G01N 30/88** (2006.01)

(52) Cooperative Patent Classification (CPC):
**G01N 30/88; G01N 30/8658; G01N 30/8696;**
**G06N 3/00;** G01N 2030/8804

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Sartorius Stedim Data Analytics AB**
**903 33 Umeå (SE)**

(72) Inventors:
• **Andersson, David**
  **906 55 Umeå (SE)**
• **Edlund, Christoffer**
  **903 32 Umeå (SE)**
• **Corbett, Brandon**
  **Dundas, L9H 6E8 (CA)**

(74) Representative: **Müller-Boré & Partner**
**Patentanwälte PartG mbB**
**Friedenheimer Brücke 21**
**80639 München (DE)**

(54) **COMPUTER-IMPLEMENTED METHOD, COMPUTER PROGRAM PRODUCT, CONTROL DEVICE AND SYSTEM FOR CONTROLLING A CHROMATOGRAPHY SYSTEM**

(57)     A computer-implemented method is provided for controlling a chromatography system (10) that is configured to physically perform and/or simulate a chromatography process. The method comprises: obtaining, from the chromatography system (10), a current state of the chromatography system (10), the current state including one or more values of one or more state parameters, the one or more state parameters including one or more quantities of one or more substances present in the chromatography system (10); determining one or more values of one or more control parameters for the chromatography system (10) according to a policy that is configured to map the current state to a corresponding action representing the one or more values of the one or more control parameters, the one or more control parameters including at least: a position of a valve comprised in the chromatography system (10) and/or a pump speed of a pump comprised in the chromatography system (10); and controlling the chromatography system (10) using the one or more determined values of the one or more control parameters, wherein the policy is generated according to a machine learning algorithm that uses state-action pairs for training; and wherein the state-action pairs are obtained at least in part by physically performing and/or simulating the chromatography process by the chromatography system (10), each of the state-action pairs including: a state (St) of the chromatography system (10) including one or more values of the one or more state parameters at a particular point in time (t); and an action (At) including one or more values of the one or more control parameters, the chromatography system (10) being controlled, in response to the state (St), using the one or more values included in the action (At).

**FIG 1**

EP 4 286 842 A1

**Description**

The application relates to a computer-implemented method, a computer program product, a control device and a system for controlling a chromatography system.

**BACKGROUND**

Chromatography is used to separate and purify chemical components in a mixture. For example, to separate a component (e.g., chemical substance), a mixture of components may be dissolved in a fluid medium (e.g., liquid or gas) called the mobile phase. Components in the mobile phase can then be separated by interaction with a material called the stationary phase that is usually fixed on a chromatographic bed such as a column, a capillary tube, a plate or a sheet, etc. Since different components in the mixture tend to have different affinities for the stationary phase, different components are usually retained in the chromatographic bed for different lengths of time. Thus, different components of the mixture dissolved in the mobile phase may travel through the chromatographic bed with different velocities, which allows separation of the components.

For example, in resin liquid chromatography, a solid phase (as the stationary phase) may be applied to the inner surfaces of porous resin particles, commonly spherical in shape. The particles prepared in this fashion can be packed in a cylindrical column to be able to contain the liquid mobile phase. In an initial stage of a separation process, the mobile phase may be injected or loaded into the column. As the mobile phase flows through the column, components with an affinity for the solid phase will migrate at a lower velocity. This can allow collection of highly concentrated components at the column outlet.

A chromatography process may be used for purification of a target substance, for example, a specific protein. For example, bind-elute chromatography process may be employed for capturing monoclonal antibodies using protein A in a binding matrix of a resin.

In a chromatography process, many factors and/or parameters may affect resulting yield and/or concentration of a target component separated from other components in the mixture. Thus, it may be difficult to control chromatography processes for obtaining desired results.

In order to determine a set of parameters that can lead to a desired result of a chromatography process, physical experiments of the chromatography process may be carried out. The physical experiments, however, may be time-consuming and/or expensive. For a specific example, the use of affinity chromatography for purification of proteins can be prohibitively expensive due to a multitude of factors including the high cost of raw materials. For instance, monoclonal antibodies (mAbs) are a class of drug in which mammalian cells are genetically engineered to produce antibody proteins which catalyze the immune system of patients. mAbs comprise the most common class of biopharmaceutical products and are also among the most expensive to manufacture. One particularly expensive step in this process may be the so-called Protein A capture step. In protein A affinity chromatography, mAbs can be separated by binding to solid phase receptors. Further, many parameters arising from the interactions in the production chain, together with multiple input components, may make output hard to forecast. Moreover, one of the main challenges of the capture step may be variability in the resin columns. The variability may come from both manufacturing variability and changes in the chromatography capacity over time due to usage.

Alternative to or in addition to the physical experiments, in some circumstances, simulations of a chromatography process may be carried out.

**SUMMARY**

According to an aspect, the problem relates to facilitating control of a chromatography system with improved performance. The problem is solved by the features disclosed by the independent claims. Further exemplary embodiments are defined by the dependent claims.

According to an aspect, a computer-implemented method is provided for controlling a chromatography system that is configured to physically perform and/or simulate a chromatography process. The method comprises:

> obtaining, from the chromatography system, a current state of the chromatography system, the current state including one or more values of one or more state parameters, the one or more state parameters including one or more quantities of one or more substances present in the chromatography system;
> determining one or more values of one or more control parameters for the chromatography system according to a policy that is configured to map the current state to a corresponding action representing the one or more values of the one or more control parameters, the one or more control parameters including at least: a position of a valve comprised in the chromatography system and/or a pump speed of a pump comprised in the chromatography system; and

controlling the chromatography system using the one or more determined values of the one or more control parameters,

wherein the policy is generated according to a machine learning algorithm that uses state-action pairs for training; and wherein the state-action pairs are obtained at least in part by physically performing and/or simulating the chromatography process by the chromatography system, each of the state-action pairs including:

a state (St) of the chromatography system including one or more values of the one or more state parameters at a particular point in time (t); and
an action (At) including one or more values of the one or more control parameters, the chromatography system being controlled, in response to the state (St), using the one or more values included in the action (At).

In some exemplary embodiments, the chromatography system may comprise a chromatography device configured to physically perform the chromatography process. For example, the chromatography device may comprise one or more chromatographic beds, vessels for different kinds of media used in the chromatography process, connections between the vessels and/or the chromatographic bed(s), pumps to make the media flow through the chromatography system and/or control valves to control fluid flow. Accordingly, in some exemplary embodiments, the "one or more substances present in the chromatography system" may include one or more substances flowing through one or more of the connections between the vessels and/or through the one or more chromatographic beds. Alternatively or in addition, the "one or more substances present in the chromatography system" may include one or more substances inside one or more of the vessels.

In the present disclosure, the term "chromatographic bed" may be understood as any of different configurations in which a stationary phase used in a chromatography process is contained. Examples of a chromatographic bed may include, but are not limited to, a column, a capillary tube, a plate, a sheet, etc.

In case the chromatography system includes a plurality of chromatographic beds, the chromatographic beds may be connected in series. With a plurality of chromatographic beds connected in series, the chromatography system can perform periodic countercurrent chromatography, for example.

The chromatography system may further comprise a processor and a storage medium. The processor comprised in the chromatography system may be configured to collect sensor information from different kinds of sensors provided on the chromatography device and store the collected sensor information in the storage medium comprised in the chromatography system. The storage medium may be configured to store the collected sensor information and/or values of other parameters regarding the chromatography system.

Alternatively or additionally to the chromatography device configured to physically perform the chromatography process, the chromatography system may comprise a simulation system configured to simulate the chromatography process. The simulation system may be implemented by the processor and the storage medium comprised in the chromatography system, where the processor is configured to perform operations and/or calculations necessary to simulate the chromatography process and the storage medium stores information necessary to simulate the chromatography process.

Further, in some exemplary embodiments, the chromatography system may be configured to perform a plurality of physical and/or simulated chromatography processes in parallel and/or in series.

In various aspects and embodiments described herein, the chromatography system may be configured to communicate, to another device (e.g., a control device), its internal states (e.g., represented by the one or more state parameters) at a given point in time. The communication of the internal states may be performed by the processor comprised in the chromatography system, for example. Further, in various aspects and embodiments described herein, the chromatography system may be configured to accept programmatic control to vary values of the one or more control parameters.

In the present disclosure, the one or more state parameters may be parameters representing conditions of the chromatography system.

In case the chromatography system physically performs the chromatography process, the one or more values of the one or more state parameters may be obtained by measuring the values with sensors corresponding to the state parameters. The sensors may be provided at appropriate positions within the chromatography system. For example, in case of quantities of substances present in the chromatography system, ultra-violet (UV) sensors (e.g., UV-chromatogram), infrared (IR) sensors, mass spectrometry sensors, conductivity sensors (e.g., for measuring ion concentration), scatter light signal and/or raman spectroscopy may be used for measuring the values. Additionally or alternatively, in some circumstances, software sensors that are configured to estimate values of the state parameters from values measured by sensors may be employed. The estimated values may be derived from physical principles, data driven methods, or a combination of both.

In case the chromatography system simulates the chromatography process, the one or more values of the one or more state parameters may be obtained by calculation performed with respect to the simulation of the chromatography process.

In various aspects and embodiments described herein, control of the chromatography system with the one or more determined values of the one or more control parameters may be performed by generating one or more control signals to instruct the chromatography system to set the one or more control parameters to the one or more determined values. The generated control signals may then be communicated to the chromatography system. The chromatography system may set the one or more control parameters to the one or more determined values, following the one or more control signals. For example, in case of controlling the position of the valve, the control signal may include a signal instructing the valve to set the valve position to the desired value. In the exemplary embodiments where the chromatography system comprises a chromatography device for physically performing the chromatography process, for example, the valve may be a control valve that is configured to vary a size of a flow passage according to the control signal. In the exemplary embodiments where the chromatography system comprises a simulation system, the valve may be a virtual valve and operations and/or calculations involving the virtual valve may be performed according to the position of the valve indicated by the control signal, for example.

Any one of the various aspects and embodiments described herein may provide a data driven approach for controlling a chromatography system, which can generate control policies that can adapt to variabilities in the chromatography system (e.g., in the one or more chromatographic bed such as a column or columns) and, thus, achieve improved performance.

More specifically, the policy used for controlling the chromatography system in any one of the various aspects and embodiments described herein can allow control of a chromatography process for the whole duration of the process, including timings when substances flowing into particular components of the chromatography system (e.g., the chromatographic bed(s) and/or different vessels) are switched, since the control parameters include at least the position of the valve and the state parameters include the quantities of the substances present in the chromatography system. Thus, the control performed in any one of the various aspects and embodiments described herein may not be bound to a fixed policy that is derived from, for example, experimentally generating breakthrough curves of the chromatography process and can adapt to variability between different chromatographic beds and/or during chromatographic runs.

In some exemplary embodiments, the method according to the above-stated aspect may further comprise:

receiving the state-action pairs; and
generating the policy according to the machine learning algorithm, using the received state-action pairs.

The method according to the above-stated aspect may further comprise:
updating the policy using the current state and the corresponding action including the one or more determined values of the one or more control parameters.

In various aspects and embodiments described herein, the one or more quantities of the one or more substances present in the chromatography system include one or more of the following:

one or more quantities of the one or more substances flowing into one or more chromatographic beds comprised in the chromatography system;
one or more quantities of the one or more substances flowing out of the one or more chromatographic beds;
one or more quantities of the one or more substances within the one or more chromatographic beds;
one or more quantities of the one or more substances within one or more of vessels comprised in the chromatography system (10),
wherein the one or more state parameters may include at least one parameter based on two or more of the quantities listed above.

The "at least one parameter based on two or more of the quantities listed above" may include, for example, a ratio between two different quantities among those listed above, a total of different quantities among those listed above, a difference of different quantities among those listed above, etc..

In some exemplary embodiments, the one or more quantities of the one or more substances within the one or more chromatographic beds may be derived from the quantities of the one or more substances flowing into and out of the one or more chromatographic beds.

In various aspects and embodiments described herein, the one or more control parameters may further include one or more flow rates of one or more kinds of media flowing into and/or out of one or more of the following:

at least one of one or more chromatographic beds of the chromatography system;
at least one of vessels comprised in the chromatography system;
at least one of one or more flow controllers comprised in the chromatography system. Further, the one or more control parameters may further include one or more of the following:

a temperature in the chromatography system;
pH of a mobile phase in the chromatography system;
salinity of the mobile phase in the chromatography system.

In the present disclosure, the "flow controller" comprised in a chromatography system may be understood as a component that is configured to control flow rates from different sources of fluid (e.g., vessels) into a chromatographic bed. Each chromatographic bed of the chromatography system may have a corresponding flow controller to control fluid flow into the chromatographic bed, for example.

In case the one or more control parameters include the one or more flow rates of one or more kinds of media flowing into and/or out of at least one of the one or more chromatographic beds of the chromatography system, at least one of the vessels comprised in the chromatography system and/or at least one of the one or more flow controllers comprised in the chromatography system, control signals to control respective pumps and/or valves for adjusting the flow rates of the respective kinds of media may be generated and communicated to the chromatography system. The controlled pumps and/or valves may be physical pumps and/or valves in case the chromatography system physically perform the chromatography process and may be virtual pumps and/or valves in case the chromatography system simulates the chromatography process.

Further, in case the one or more control parameters include the temperature, pH and/or the salinity, control signals to control respective components in the chromatography system for adjusting the temperature, pH and/or salinity may be generated and communicated to the chromatography system.

Further, in various aspects and embodiments described herein, the one or more state parameters may further include one or more of the following:

a temperature at a specified point of the chromatography system;
pH of media in a specified portion of the chromatography system;
one or more parameters relating to specifications of the one or more chromatographic beds, one or more vessels comprised in the chromatography system and/or one or more connections between the vessels;
one or more maximum flow rates for one or more kinds of media that flow into the one or more chromatographic beds;
one or more upstream parameters;
one or more parameters relating to feed media, wash media and/or elute media used in the chromatography process;
conductivity:

absorption of effluent;
target protein content;
concentration of coeluting contaminants;
product concentration;
purity;
yield.

The "specified point" and the "specified portion" of the chromatography system as mentioned above may be at any point and portion within the chromatography system, respectively. For example, the "temperature" at the "specified point" of the chromatography system may be a temperature within one of the vessels comprised in the chromatography system (e.g., a vessel for feed media). Further, for example, the "pH" of the media in the "specified portion" of the chromatography system may be pH at an outlet of a chromatographic bed (e.g., a column outlet), concentration in one of the vessels (e.g., a vessel for a target product), etc.

Examples of the "one or more parameters relating to specifications of the one or more chromatographic beds, one or more vessels comprised in the chromatography system and/or one or more connections between the vessels" as stated above may include, but are not limited to, volume, size (e.g., an inner diameter of tubing), etc.

Examples of the "one or more parameters relating to feed media, wash media and/or elute media used in the chromatography process" as stated above may include, but are not limited to, product titer, flow rate, temperature, pH, etc.

In various aspects and embodiments described herein, the machine learning algorithm may include one of, or a combination of two or more of, the following:

reinforcement learning;
deep reinforcement learning;
supervised learning;
semi-supervised learning;
self-supervised learning;
imitation learning;

transfer learning.

In the present disclosure, the "reinforcement learning" may be understood as a machine learning algorithm involving training an intelligent agent (hereinafter also referred to simply as an "agent") that takes a series of actions in an environment to maximize cumulative reward. In the "reinforcement learning", the intelligent agent can learn, with trial and errors, a policy that can map a state of the environment to an action to be taken by the agent.

In the present disclosure, the "deep reinforcement learning" may be understood as a machine learning algorithm that combines the reinforcement learning and deep learning. The "deep learning" may employ one or more neural networks to obtain representations (e.g., features) of raw, input data. In the deep reinforcement learning, the policy mapping a state to an action and/or other learned functions may be implemented by the neural network(s).

In the present disclosure, the "supervised learning" may be understood as a machine learning algorithm that involves learning a function that maps an input to an output based on exemplary input-output pairs. Each exemplary input-output pair may include a particular input and a desired output for the particular input. The exemplary input-output pairs may be referred to as labelled training data.

In the present disclosure, the "semi-supervised learning" may be understood as a machine learning algorithm that uses labelled and unlabeled training data (e.g., without information on what a "desirable" output is for a certain input) for learning a function that maps an input to an output. Typically, in the semi-supervised learning, an amount of the labeled training data is smaller than an amount of the unlabeled training data.

In the present disclosure, the "self-supervised learning" may be understood as a machine learning algorithm that can learn from unlabeled data. In some examples, the self-supervised learning may involve neural networks.

In the present disclosure, the "imitation learning" may be understood as a machine learning algorithm that enables retrieval of a policy that mimics demonstrated state-action pairs that may be defined by an expert (e.g., an expert policy). In some implementations, the "imitation learning" may be used for training an agent in the reinforcement learning.

In the present disclosure, the "transfer learning" may be understood as a machine learning algorithm that applies knowledge gained while solving a problem to solving a different but similar problem.

In an exemplary combination of machine learning algorithms as stated above, for training an agent in the reinforcement learning, the imitation learning may be used for pre-training neural networks representing a policy and then use the transfer leaning.

In another exemplary combination of machine learning algorithms as stated above, for training an agent in the reinforcement learning, the imitation learning may be introduced in the semi-supervised learning.

In some exemplary embodiments, the machine learning algorithm may include the reinforcement learning or the deep reinforcement learning. In such exemplary embodiments, a reward in the reinforcement learning or the deep reinforcement learning may be calculated using one or more of the following:

at least one of the one or more values of the one or more state parameters;

a value representing a flow rate of a target compound flowing into one or more chromatographic beds of the chromatography system;

a value representing a flow rate of the target compound flowing out of one or more chromatographic beds of the chromatography system;

a value representing a quantity of the target compound for the chromatography process in or flowing into a product vessel comprised in the chromatography system;

a value representing a quantity of the target compound in or flowing into a waste vessel comprised in the chromatography system;

a value representing a quantity of spent media in or flowing into the product vessel, the spent media including substances other than the target compound;

a value representing a quantity of the spent media in or flowing into the waste vessel.

In case the values representing the flow rates of the target compound flowing into and out of the one or more chromatographic beds of the chromatography system are used for calculating the reward, a quantity of the target compound currently in the one or more chromatographic beds may be approximated and incorporated in the reward to punish the agent of the reinforcement learning or the deep reinforcement learning for keeping too much target compound in the one or more chromatographic beds in the end of the chromatography process.

In the present disclosure, the "spent media" may indicate waste products from production of target molecules. For example, in case of separating a certain type of protein (e.g., mAb type protein), the target protein may be cultured in a mammalian egg cell. In a downstream processing, the cells may be initially grown in some vessel. As the cell is broken down into its constituent parts at the end of its life cycle, this may become the feed media. The "spent media" may indicate all rest products of the cell culture process that do not include the elution buffer or the target protein. The spent media may include, for example, non target proteins, depleted nutrients, metabolites, etc.

Accordingly, the reward calculated as stated above may focus on the overall efficiency of the chromatography system, for example, the quantities of the target product and/or the spent media in or flowing into the product vessel and/or the waste vessel, rather than relying on properties of the chromatography system such as a binding capacity of the column, which can vary as the chromatography process progresses. Thus, the reward calculated above may enable generation of the policy allowing adapting to the variability of the chromatography system when controlling the chromatography system.

Further, in the exemplary embodiments where the machine learning algorithm includes the reinforcement learning or the deep reinforcement learning, the reward may be calculated using the following reward function:

$$R = (M \times \Delta tc + \Delta sm) \times pure + c - p \times done,$$

wherein, M is a factor indicating how much more the substances other than the target compound are used in the chromatography process as compared to a total amount of the target compound fed into the chromatography system; wherein $\Delta tc$ is calculated by:

$$\Delta tc = tc_{prod} - tc_{waste},$$

where $tc_{prod}$ indicates the quantity of the target compound in the product vessel and $tc_{waste}$ indicates the quantity of the target compound in the waste vessel; wherein $\Delta sm$ is calculated by:

$$\Delta sm = sm_{waste} - sm_{prod},$$

where $sm_{waste}$ indicates the quantity of the spent media in the waste vessel and $sm_{prod}$ indicates the quantity of the spent media in the product vessel; wherein *pure* is a purity term calculated by:

$$pure = max \left( \frac{tc_{prod}}{tc_{prod} + sm_{prod}}, x \right),$$

where x is a minimum value of purity of the target compound in the product vessel; wherein *p* is a punishment term determined by:

$$p = \begin{cases} tc_{col} & if \ tc_{col} > t \\ 0 & otherwise \end{cases},$$

where $tc_{col}$ is the quantity of the target compound within the chromatographic bed and t is a specified threshold value; wherein c is a clean term calculated by:

$$c = max(tc_{prod} - sm_{prod}, 0);$$

and
wherein *done* is set to 1 in case of a terminal state of the chromatography process and set to 0 otherwise.

Further, in the exemplary embodiments where the machine learning algorithm includes the deep reinforcement learning, the deep reinforcement learning may involve an actor-critic method that uses:

an actor network comprising a first neural network to be trained to represent the policy, the first neural network being configured to take a state as an input and an action as an output; and
a critic network comprising a second neural network to be trained to estimate the reward gained by a state-action pair, the critic network being used to train the actor network to output an action that yield high rewards in response to a state input to the actor network.

In the present disclosure, the term "neural network" may indicate an artificial neural network.

Further, in some exemplary embodiments, the machine learning algorithm may include the supervised learning or the semi-supervised learning and at least a part of the state-action pairs may be defined by an expert of the chromatography process.

In some exemplary embodiments, the chromatography system may comprise:

a chromatography device configured to physically perform the chromatography process; and
a simulation system that is configured to simulate the chromatography process and that is implemented by a processor and a storage medium,
wherein said controlling of the chromatography system may include controlling the chromatography device comprised in the chromatography system using the one or more determined values of the one or more control parameters.

According to another aspect, which might specifically be used in connection with any computer-implemented method for controlling a chromatography system as described herein, a computer-implemented method is provided for configuring a control device for controlling a chromatography system that is configured to physically perform and/or simulate a chromatography process. The method comprises:

receiving state-action pairs obtained at least in part by physically performing and/or simulating the chromatography process by the chromatography system, each of the state-action pairs including:

a state (St) of the chromatography system including one or more values of one or more state parameters at a particular point in time (t), the one or more state parameters including one or more quantities of one or more substances present in the chromatography system; and
an action (At) including at least one or more values of one or more control parameters for the chromatography system, the chromatography system being controlled using the one or more values included in the action (At) in response to the state (St), the one or more control parameters including at least a position of a valve comprised in the chromatography system and/or a pump speed of a pump comprised in the chromatography system;

generating, according to a machine learning algorithm and using the received state-action pairs, a policy that maps a current state including one or more values of the one or more state parameters to a corresponding action including one or more values of the one or more control parameters; and
storing the generated policy in a storage medium comprised in the control device.

According to yet another aspect, a computer program product is provided. The computer program product comprises computer-readable instructions that, when loaded and run on a computer, cause the computer to perform the method according to any one of the above-stated aspects and various embodiments thereof.

According to yet another aspect, a control device is provided for controlling a chromatography system that is configured to perform and/or simulate a chromatography process. The control device comprises:

a processor configured to perform the method according to any one of the above-stated aspects and various embodiments thereof; and
a storage medium configured to store the policy.

According to yet another aspect, a system is provided. The system comprises:

a chromatography system that is configured to perform and/or simulate a chromatography process; and
the control device according to the above-stated aspect, the control device being connected to the chromatography system.

Various aspects and embodiments described herein may be applied to chromatography systems configured to physically perform and/or simulate different kinds of chromatography processes. Examples of different kinds of chromatography processes may include, but are not limited to, a resin liquid chromatography process, a high pressure liquid chromatography process, a gas chromatography process, an ion exchange chromatography process, an affinity chromatography process, a membrane chromatography process, a continuous chromatography process, etc.

The subject matter described in the application can be implemented as a method or as a system, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can also be implemented as a system including a processor, and a memory coupled to the processor. The memory may encode one or more programs to cause the processor to perform one or more of the methods described in the application. In some examples, the system may be a general purpose computer system. In other examples, the system may be a special purpose computer system including an embedded system.

## BRIEF DESCRIPTION OF THE DRAWINGS

Details of one or more implementations are set forth in the exemplary drawings and description below. Other features will be apparent from the description, the drawings, and from the claims. It should be understood, however, that even though embodiments are separately described, single features of different embodiments may be combined to further embodiments.

**Fig. 1** shows a functional block diagram of an exemplary system according to the present disclosure.

**Fig. 2** shows a schematic diagram illustrating an exemplary simulation environment for simulating a chromatography process.

**Fig. 3** shows a schematic diagram illustrating a reinforcement learning agent interacting with an environment.

**Fig. 4** shows a schematic diagram illustrating an agent and an environment for deep reinforcement learning involving an actor-critic method.

**Fig. 5** shows a schematic diagram illustrating multi-environment interaction for a reinforcement learning agent.

**Fig. 6** shows a flowchart showing an exemplary process performed by the control device shown in Fig. 1.

**Fig. 7** shows a flowchart showing an exemplary process to configure a policy for the control device shown in Fig. 1.

**Fig. 8** shows an exemplary benchmark human-made policy to separate mAb protein and spent media for controlling an exemplary chromatography system.

**Fig. 9** shows a control process of the exemplary chromatography system, performed by a reinforcement learning agent after training for 657 episodes in an exemplary use case.

**Fig. 10** shows a control process of the exemplary chromatography system, performed by a reinforcement learning agent after training for 10 episodes in the exemplary use case.

**Fig. 11** shows a reward in a reinforcement learning from a term concerning purity of the target compound obtained in a chromatography process.

**Fig. 12** shows a control process of a simulated chromatography device by a reinforcement learning agent in a further exemplary use case.

**Fig. 13** shows a control process of a simulated chromatography device by a reinforcement learning agent in a yet further exemplary use case.

**Fig. 14** shows a further exemplary simulated benchmark policy for to separate mAb protein and spent media for controlling an exemplary chromatography system.

**Fig. 15** shows a schematic diagram illustrating a further exemplary simulation environment for simulating a chromatography process.

**Fig. 16** shows an exemplary hardware configuration of a computer that may be used to implement at least a part of a system according to the present disclosure.

**DETAILED DESCRIPTION OF EMBODIMENTS**

In the following text, a detailed description of examples will be given with reference to the drawings. It should be understood that various modifications to the examples may be made. In particular, one or more elements of one example may be combined and used in other examples to form new examples.

**System Configuration**

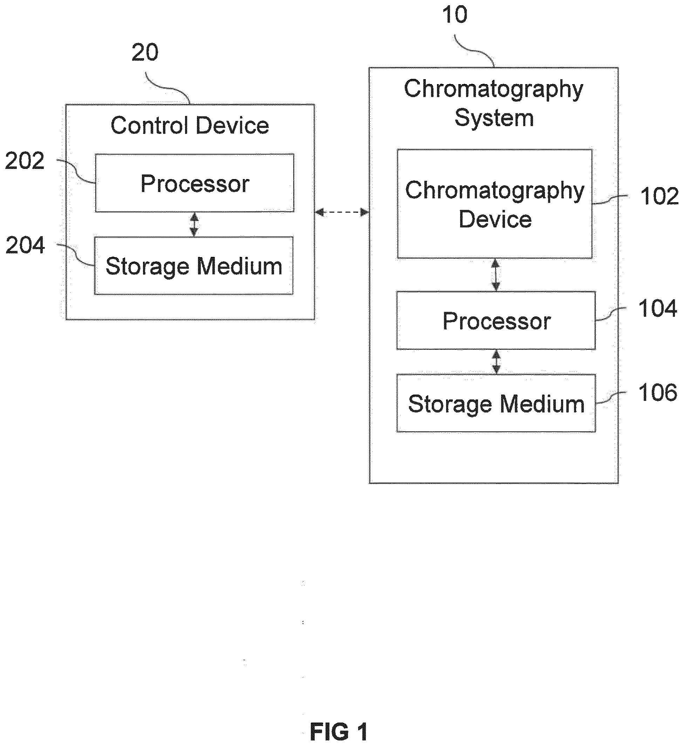

**Fig. 1** shows a functional block diagram of an exemplary system according to the present disclosure. The exemplary system shown in Fig. 1 comprises a chromatography system 10 and a control device 20.

As shown in Fig. 1, the chromatography system 10 may comprise a chromatography device 102, a processor 104 and/or a storage medium 104.

The chromatography device 102 may be a device configured to physically perform a chromatography process. For example, although not shown in Fig. 1, the chromatography device 102 may comprise a chromatographic bed, vessels for different kinds of media used in the chromatography process, connections between the vessels, pumps to make the media flow through the chromatography system and/or control valves to control fluid flow. The chromatographic bed may be a configuration in which a stationary phase used in the chromatography process is contained and may include a column, a capillary tube, a plate, a sheet, or the like. In some exemplary embodiments, the chromatography device 10 may comprise a plurality of chromatographic beds, e.g., for multi-column chromatography. For example, in case the chromatography device 10 includes a plurality of columns as the chromatographic beds, the chromatography device 10 may be used for performing periodic countercurrent chromatography.

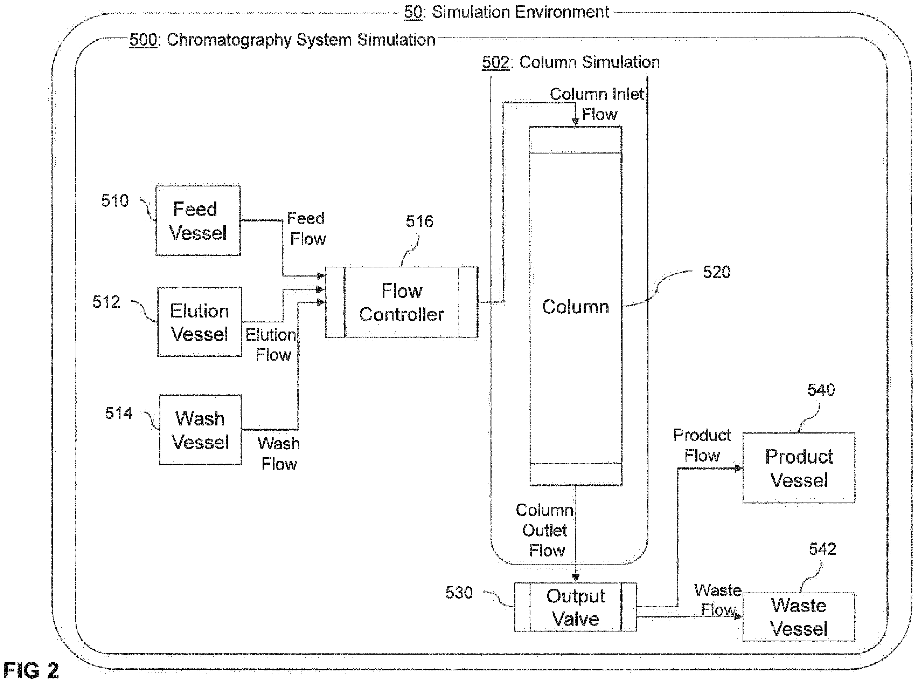

In some exemplary embodiments, the processor 104 of the chromatography system 10 may be configured to simulate a chromatography process. For example, a simulation environment may be implemented using the processor 104 and the storage medium 106. The processor 104 may be configured to perform operations and/or calculations necessary to simulate the chromatography process. The storage medium 106 of the chromatography system 10 may store information necessary for the processor 104 to simulate the chromatography process. Details of the simulation environment will be described later below with reference to Fig. 2, showing a specific example of the simulation environment.

Further, the processor 104 may be configured to collect internal states of the chromatography system 10 at given points in time and communicate the collected information to another device such as the control device 20. The internal states may be represented by one or more values of one or more state parameters. The one or more state parameters may represent conditions of the chromatography system 10.

For instance, the one or more state parameters may include one or more quantities of one or more substances present in the chromatography system 10. The one or more quantities of the one or more substances present in the chromatography system 10 may include, for example, one or more quantities of the one or more substances flowing into the one or more chromatographic beds comprised in the chromatography system 10, one or more quantities of the one or more substances flowing out of the one or more chromatographic beds one or more quantities of the one or more substances within the one or more chromatographic beds and/or one or more quantities of the one or more substances within one or more of vessels comprised in the chromatography system 10. Further, in some exemplary embodiments, the one or more state parameters may include at least one parameter based on two or more of the quantities mentioned above (e.g., ratio, difference, total, etc.).

Further examples of the one or more state parameters may include, but are not limited to, a temperature at a specified point of the chromatography system, pH of media in a specified portion in the chromatography system, one or more parameters relating to specifications of the one or more chromatographic beds, one or more vessels comprised in the chromatography system and/or one or more connections between the vessels, one or more maximum flow rates for one or more kinds of media that flow into the one or more chromatographic beds, one or more upstream parameters, one or more parameters relating to feed media, wash media and/or elute media used in the chromatography process, conductivity, absorption of effluent, target protein content, concentration of coeluting contaminants, product concentration, purity, yield, etc.

At least some values of the one or more state parameters may be obtained by the processor 104 from one or more sensors provided on the chromatography device 102. Sensors corresponding to the state parameters of interest may be provided at appropriate positions within the chromatography device 102. For example, in case the state parameters include quantities of substances present in the chromatography system, ultra-violet (UV) sensors (e.g., UV-chromatogram), infrared (IR) sensors, mass spectrometry sensors conductivity sensors (e.g., for measuring ion concentration), scatter light signal and/or raman spectroscopy may be used for measuring the values. Further, for example, in case the state parameters include temperature and/or pH, a temperature sensor and/or pH sensor may be used. Additionally or alternatively, in some circumstances, software sensors that are configured to estimate values of the state parameters from values measured by sensors may be employed. The estimated values may be derived from physical principles, data driven methods, or a combination of both. The software sensors may provide the estimated values to the processor 104.

In some circumstances, some values of the one or more state parameters may be provided to the processor 104 via a user input. For example, in case the state parameters include specifications of components of the chromatography device (e.g., volumes of vessels, connections between the vessels and/or the chromatographic bed(s)), the values of the state parameters may be input by the user to the processor 104 using an input device (not shown).

For a simulated chromatography process, the processor 104 may obtain values of the one or more state parameters during simulation of the chromatography process, for example, by calculation performed with respect to the simulation of the chromatography process.

Further, the chromatography system 10 may be configured to accept programmatic control to vary values of one or more control parameters for the chromatography process. The control may be performed by the control device 20.

As can be seen from Fig. 1, the control device 20 may comprise a processor 202 and a storage medium 204. The control device 20 may be connected to the chromatography system 10 with wired and/or wireless communication network(s).

The processor 202 of the control device 20 may be configured to obtain a current state of the chromatography system 10 from the chromatography system 10. For example, the processor 202 of the control device 20 may receive the current state from the processor 104 of the chromatography system 10. The current state may include one or more values of one or more of the state parameters as described above.

The processor 202 may be further configured to determine one or more values of one or more control parameters for the chromatography system 10 according to a policy that is configured to map the current state to a corresponding action representing the one or more values of the one or more control parameters. The one or more control parameters may include at least: a position of a valve comprised in the chromatography system 10 and/or a pump speed of a pump comprised in the chromatography system 10. Further, for example, the one or more control parameters may include one or more flow rates of one or more kinds of media flowing into and/or out of one or more of the following: at least one of one or more chromatographic beds of the chromatography system 10, at least one of vessels comprised in the chromatography system 10, at least one of one or more flow controllers comprised in the chromatography system 10. Further, the one or more control parameters may include a temperature in the chromatography system, pH of a mobile phase in the chromatography system 10 and/or salinity of the mobile phase.

The policy may be generated according to a machine learning algorithm that uses state-action pairs for training. The state-action pairs may be obtained at least in part by physically performing and/or simulating the chromatography process by the chromatography system 10. Each of the state-action pairs may include:

a state (St) of the chromatography system 10 including one or more values of the one or more state parameters at a particular point in time (t); and

an action (At) including one or more values of the one or more control parameters, the chromatography system 10 being controlled, in response to the state (St), using the one or more values included in the action (At).

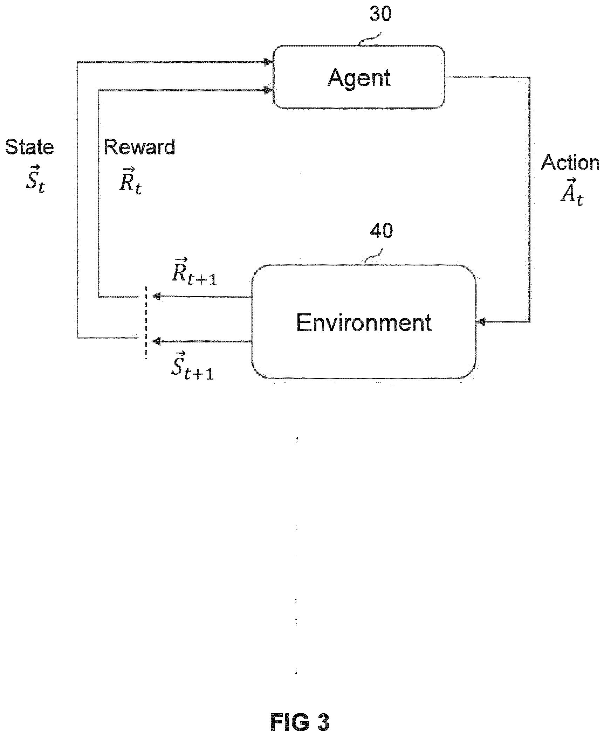

Details of the machine learning algorithm for generating the policy will be described later below with reference to Figs. 3 to 5.

Further, the processor 202 may be configured to control the chromatography system 10 using the one or more determined values of the one or more control parameters. For example, the processor 202 may be configured to generate one or more control signals to instruct the chromatography system 10 to set the one or more control parameters to the one or more values determined according to the policy and the current state obtained from the chromatography system 10. The generated control signals may be communicated to the chromatography system 10 and the chromatography system 10 may set the one or more control parameters to the one or more determined values, following the one or more control signals.

For example, in case of controlling the position of the valve in the chromatography system 10, the control signal may include a signal instructing the valve to set the valve position to the desired value. In case of physically performing the chromatography process by the chromatography device 102, for example, the valve may be a control valve that is configured to vary a size of a flow passage according to the control signal. In case of simulating the chromatography process by the processor 104, the valve may be a virtual valve and operations and/or calculations involving the virtual valve may be performed according to the position of the valve indicated by the control signal, for example.

Further, for example, in case of controlling the one or more flow rates of the one or more kinds of media used in the chromatography process, the control signal(s) may include a signal instructing respective pumps and/or valves for adjusting the respective kinds of media. Similarly for controlling the position of the valve as mentioned above, the pumps and/or valves may be physical, controllable pumps and/or valves comprised in the chromatography device 10 in case of physically performing the chromatography process. In case of simulating the chromatography process, virtual pumps and/or valves in the simulation environment may be controlled with the generated control signals.

Further, for example, in case of controlling the temperature, the pH and/or the salinity, the control signals may include instructions to respective components in the chromatography system for adjusting the temperature, the pH and/or the salinity. In case of physically performing the chromatography process, the respective components may be physical components comprised in the chromatography device 10. In case of simulating the chromatography process, the respective components may be virtual components in the simulation environment.

The storage medium 204 of the control device 20 may store information that is necessary for the processor 202 to control the chromatography system 10. For instance, the storage medium 204 may store the policy for determining the one or more values of the one or more control parameters in response to receiving the current state from the chromatography system 10. Further, for example, the storage medium 204 may store information used in the machine learning algorithm to generate the policy.

Accordingly, the control device 20 may provide an automated controller for the chromatography system 10 and can learn how to operate itself through interaction with real and/or simulated data.

It should be noted that configurations of the chromatography system 10 and the control device 20 as shown in Fig. 1 are mere examples used in some exemplary embodiments. In other exemplary embodiments, the chromatography system 10 and/or the control device 20 may have different configurations.

For example, although Fig. 1 shows the chromatography system 10 and the control device 20 to be separate devices, the control device 20 may be implemented as a part of the chromatography system 10, in other words, the control device 20 may be integrated within the chromatography system 10. In such a case, the processor 104 and the storage medium 106 comprised in the chromatography system 10 may be configured to implement the functions of the processor 202 and the storage medium 204 of the control device 20 as described above.

Further, in some exemplary embodiments, the chromatography system 10 may comprise the processor 104 and the storage medium 106, without the chromatography device 102. In such exemplary embodiments, the chromatography system 10 may perform simulation of the chromatography process with the processor 104 and the storage medium 106 but does not physically perform the chromatography process.

In some other exemplary embodiments, the processor 104 of the chromatography system 10 is not configured to perform simulations of the chromatography process. In such exemplary embodiments, the chromatography system 10 may physically perform the chromatography process by the chromatography device 102 but does not simulate the chromatography process.

## Exemplary Simulation Environment

**Fig. 2** shows a schematic diagram illustrating an exemplary simulation environment, implemented by the processor 104 of the chromatography system 10, for simulating a chromatography process. In the specific example shown in Fig. 2, the simulation environment 50 provides chromatography system simulation 500 comprising modules representing: a column simulation 502, a feed vessel 510, an elution vessel 512, a wash vessel 514, a flow controller 516, an output valve 530, a product vessel 540 and a waste vessel 542. The column simulation 502 comprises a model of a column 520 as a chromatographic bed.

The exemplary simulation environment 50 shown in Fig. 2 describes a single column system to model a bind-elute process of a liquid chromatography process. A physical system (e.g., the chromatography device 102) that is recreated in the exemplary simulation environment 50 may comprise the feed vessel 510 to contain unprocessed media, the elution vessel 512 containing elution buffer and the wash vessel 514 containing wash solution used to rinse impurities and spent media from the column 520. The vessels 510, 512 and 514 may be connected to the flow controller 516 that is configured to control the flow rates from the vessels 510, 512 and 514, individually into the column 520. The flow controller 516 may be configured to provide control signals to controllable pumps and/or valves for adjusting the respective flow rates. For example, the flow controller 516 may obtain target values of the respective flow rates, generate appropriate control signals for the controllable pumps and/or valves to achieve the target values and provide the generated control signals to the controllable pumps and/or valves. The column inlet may be fed by the common volumetric flow (referred to as e.g., "column inlet flow") of one or a combination of the mixture species contained in one or more of the feed vessel 510, the elution vessel 512 and the wash vessel 514. The flow controller 516 may also be configured to join the separate vessel outputs into the column inlet flow by controlling the controllable pumps and/or valves. On the other end of the column, the outlet may feed into the output valve 530 that can siphon the processed media into either the product vessel 540 or the waste vessel 542 designed to contain purified media and waste, respectively.

To represent the physical system (e.g., the chromatography device 102), the chromatography system simulation 500 in the exemplary simulation environment 50 may combine a set of differential equations describing the flow between the various vessels, valves, and the column. The column itself may be modeled by an implementation of a mechanistic model known as the General Rate model (see e.g., Guiochon et al., "Fundamentals of Preparative and Nonlinear Chromatography", second edition, Elsevier, February 10, 2006; Leweke et al, "Chromatography Analysis and Design Toolkit (CADET)", Computers and Chemical Engineering, vol. 113 (2018), 274-294; see also URL: https://cadet.github.io/v4.3.0/modelling/unit_operations/general_rate_model.html). The model of the column may be composed of a set of partial differential equations. The equations may describe interstitial mobile phase, stagnant mobile phase in the particle, and solid phase concentrations as functions of space and time. Various parameters can be set to reflect column, particle, and resin-specific characteristics. The set of equations may be solved numerically using a technique called Orthogonal Collocation that belongs to a family of methods known as the Method of Weighted Residuals (see e.g., Young, "Orthogonal collocation revisited", Computer Methods in Applied Mechanics and Engineering, vol. 345, March 1, 2019, p. 1033 to 1076, https://doi.org/10.1016/j.cma.2018.10.019). The Method of Weighted Residuals encompasses also Galerkin method (Id.). In Orthogonal Collocation, the procedure may be defined by the choice of points for discretization. These points may be obtained by finding the root points of a chosen Jacobi Polynomial, for example, the Legendre Polynomial. The procedure may discretize the spatial domain of the equations and turn them into a system of ordinary differential equations. The column equations and general system equations may be combined and solved in the temporal domain using an Euler step method discretization technique (see e.g., Wikipedia, "Backward Euler method", https://en.wikipedia.org/wiki/Backward_Euler_method; Wikipedia, "Euler method", https://en.wikipedia.org/wiki/Euler_method).

The simulated chromatography system may model control surfaces of the physical system (e.g., the chromatography device 102). This may allow an operator to set the volumetric flow rates from the feed vessel 510, the elute vessel 512 and the wash vessel 514, using the flow controller 516. The simulator may calculate the flow rate into the column 520 and the average flow rate of the phase migration through the column 520. The inlet concentrations may be defined from the vessel concentrations and the flow rate from the flow controller 516 and used in the column simulation 502. The column simulation 502 may continuously calculate the concentration of the components in the column 520 and as the solution reaches the column outlet, the output valve 530 may allow the operator to direct flow towards the product vessel 540 or the waste vessel 542.

In the chromatography system simulation 500, observations of internal states of the chromatography system may be recorded in a time indexed state vector. The state vector may include the one or more state parameters as described above with reference to the chromatography system 10 shown in Fig. 1. In the specific example of the chromatography system simulation 500 shown in Fig. 2, the chromatography system 10 may maintain, as the one or more state parameters, the current and historical records of one or more of:

- component concentrations in the feed vessel 510, the elution vessel 512, the wash vessel 514, the product vessel 540 and/or the waste vessel 542;
- component concentrations along the length of the column 520;
- component solution volumes in the feed vessel 510, the elution vessel 512, the wash vessel 514, the product vessel 540 and/or the waste vessel 542;
- approximate component mass contained in the column 520 and the feed vessel 510, the elution vessel 512, the wash vessel 514, the product vessel 540 and/or the waste vessel 542.

The flow controller 516 and the output valve 530 may be controlled programmatically. For example, the flow controller 516 can set flows for each component between zero and a specified maximum flow rate (e.g., $2e^{-6}$ [m3/s]) and the output valve 530 may be set to direct the flow either to the waste vessel 542 or to the product vessel 540.

It should be noted that the simulation environment 50 as described above is merely an example and the chromatography system 10 may implement simulation environments different from the exemplary simulation environment 50 shown in Fig. 2. For example, in case a different kind of chromatography process is simulated, the simulation environment implemented by the chromatography system 10 may have different components and structure appropriate for simulating the different kind of chromatography process.

## Machine Learning Algorithms for Policy Generation

As stated above with regards to the control device 20 shown in Fig. 1, the policy according to which one or more values of the one or more control parameters are determined may be generated according to a machine learning algorithm that uses state-action pairs for training. For example, the machine learning algorithm may include one of, or a combination of two or more of: reinforcement learning, deep reinforcement learning, supervised learning, semi-supervised learning, self-supervised learning, imitation learning, transfer learning.

### a) Reinforcement Learning

In some exemplary embodiments, reinforcement learning may be used as the machine learning algorithm. Reinforcement learning typically aims to optimize the behavior of an agent in an environment by defining a reward function that should increase in value for desirable behavior and decrease in value for undesirable behavior. Thus, the reinforcement learning algorithm may be based on the agent interacting with an environment and may be directed to making the agent seek out and repeat actions that yield higher reward using a learning method. The attempt to repeat actions that yield higher reward usually must be balanced with exploration in order to avoid the agent getting stuck in local optima. **Fig. 3** shows a schematic diagram illustrating a reinforcement learning agent interacting with an environment.

Referring to Fig. 3, an agent 30 may interact with an environment 40. During learning, the environment 40 may be in a state St at a time point t and the agent 30 may select an action At in response to obtaining the state St. The environment 40 may update its state with the action At taken by the agent 30 and return the next state $S_{t+1}$ and a corresponding reward $R_{t+1}$ associated with that state $S_{t+1}$. In the context of the present disclosure for controlling a chromatography system 10, the environment 40 may represent the chromatography system 10, the state St may include one or more values of the one or more state parameters of the chromatography system 10 and the action At may include one or more values of the one or more control parameters to control the chromatography system 10. The reward $R_{t+1}$ may be calculated using values of some parameters that can represent the performance of the chromatography process, for example, an amount of a target compound obtained at the end of the chromatography process. The interaction between the agent 30 and the environment 40 may be continued until the environment 40 reaches a terminal state or for a specified number of iterations. Typically, for the agent 30 to learn an optimal policy, one must run multiple sets of interactions between the agent 30 and the environment 40 from start-to-finish, for example, from an initial state of the environment 40 until the environment 40 reaches the terminal state or until the specified number of iterations are completed. Such sets of interactions are often referred to as "episodes" or "trajectories".

b) Deep Reinforcement Learning

In some exemplary embodiments, deep reinforcement learning may be employed as the machine learning algorithm. Deep reinforcement learning may be considered as a combination of classical reinforcement learning as stated above and deep learning that employs neural networks. In the deep reinforcement learning algorithm, the policy mapping a state to an action and/or other learned functions may be implemented by the artificial neural networks.

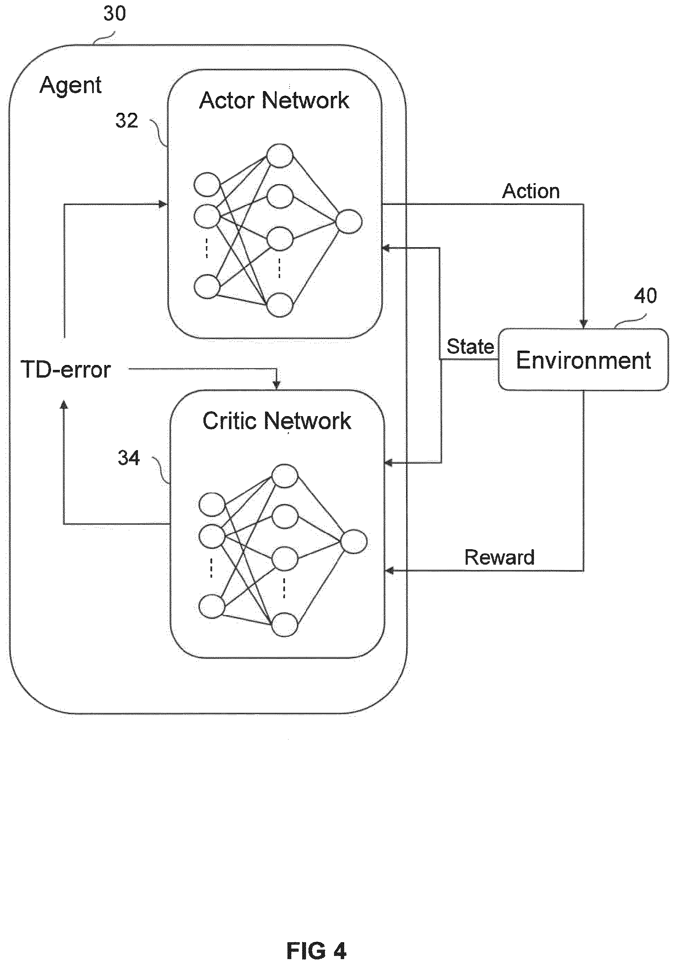

An exemplary algorithm of the deep reinforcement learning may involve an actor-critic method that uses components called an "actor" and a "critic", both being implemented as neural networks. **Fig. 4** shows a schematic diagram illustrating an agent and an environment for the deep reinforcement learning involving an actor-critic method.

Referring to Fig. 4, the agent 30 may comprise an actor network 32 and a critic network 34. The actor network 32 may comprise a first neural network to be trained to represent the policy, the first neural network being configured to take a state St as an input and an action At as an output. The critic network 34 may comprise a second neural network to be trained to estimate the reward gained by a state-action pair. The critic network 34 may be used to train the actor network 32 to output an action that yield high rewards in response to the current state St input to the actor network 32.

As a specific example, a deep reinforcement learning algorithm called Twin-Delayed DDPG (TD3) (see e.g., Fujimoto et al., "Addressing Function Approximation Error in Actor-Critic Methods", Proceedings of the 35th International Conference on Machine Learning, Stockholm, Sweden, PMLR 80, 2018, URL: https://arxiv.org/abs/1802.09477) that is built upon the Deep Deterministic Policy Gradient (DDPG) (see e.g., Lillicrap et al., "Continuous Control with Deep Reinforcement Learning", URL: https://arxiv.org/abs/1509.02971) may involve the agent 30 comprising the actor network 32 and the critic network 34 as shown in Fig. 4.

TD3 may be considered as a temporal difference (TD) learning algorithm in which an estimate of future rewards may be bootstrapped by estimating the future rewards with a value function instead of running interactions of the agent 30 with the environment 40 until the end and gathering up all future rewards. The value function estimation may be made by the critic network 34 that can iteratively improve in making these estimations. To train the critic network 34, the performance of the critic network 34 may be estimated in a bootstrapping fashion by calculating a TD-error defined as follows:

$$TD_{error} = R_t + \gamma Q\big(S_{t+1}, A_{t+1}, w_Q\big) - Q\big(S_t, A_t, w_Q\big),$$

where Rt, St and At, may be the reward, state, and action of a current timestep t, respectively, and $S_{t+1}$ and $A_{t+1}$ may be the state and action of the following timestep t+1, respectively. Q may be calculated by the critic network 34 with weights $w_Q$ and may be used to estimate the future rewards, also referred to as Q-value, for a state-action pair. y may be a discounting factor that is used to discount the rewards of future actions since they are usually more uncertain than current rewards. Ideally, the TD error should approach zero when the networks become better since the Q-value of timestep t should be equal to the estimated reward of the timestep t added with the Q-value of the timestep t+1, given a perfect Q-value estimation, as follows:

$$Q\big(S_t, A_t, w_Q\big) = R_t + \gamma Q\big(S_{t+1}, A_{t+1}, w_Q\big).$$

The $TD_{error}$ may be used as the loss/cost-function to train the critic network 34 with standard deep learning optimizing techniques such as gradient decent. The actor network 32 may be trained to produce the optimal policy by estimating the Q-value $\hat{R}$ with the use of the critic network 32 as follows:

$$\hat{R} = Q\big(S_t, A_t, w_Q\big),$$

where action At may be an output of the actor network 32 under a policy $\pi$ based on state $S_t$ and weights $w_\pi$:

$$A_t = \pi(S_t, w_\pi).$$

Since the goal of the actor network 32 may be to take an action that will generate the highest possible reward and the critic network 34 can provide such an estimate that is differentiable, gradient ascent may be used for the actor network 32 to update the network weights $w_\pi$ to yield a better policy $\pi$. In practice, this may be done by freezing the network weights of the critic network 34 and using gradient decent on the negative future reward $\hat{R}$ estimated for the current action-state pair, as follows:

$$L_{actor} = -Q\big(S_t, \pi(S_t,\ w_\pi), w_Q\big).$$

By leveraging the bootstrapping in TD-learning, only the state, action, reward, next state, and next action for a timestep t may be necessary to calculate all the losses to train a reinforcement learning agent such as the agent 30 shown in Fig. 4. This is often referred to as State-Action-Reward-State-Action (SARSA). In practice, this may mean that when the agent 30 is interacting with the environment 40, it may be possible to save SARSA for each timepoint and use these experiences for training.

When training the agent 30, the agent 30 may run a simulation (and/or make a real-world interaction) for a certain number of iterations or until a terminal condition is reached. During the training, the SARSA, in other words, experiences, may be recorded and stored in a memory buffer. After interacting with the environment 40 for a specified number of steps, the agent 30 may sample the memory buffer for a fixed number of times and train the agent networks (e.g., the actor network 32 and the critic network 34) with those experiences. Accordingly, training examples drawn can come from both current and past episodes, which may produce a more stable training since the drawn experiences are often not as correlated with each other as in the case where the training was done with chronologically following experiences (see e.g., Mnih et al., "Playing Atari With Deep Reinforcement Learning", NIPS Deep Learning Workshop 2013; URL: https://arxiv.org/abs/1312.5602).

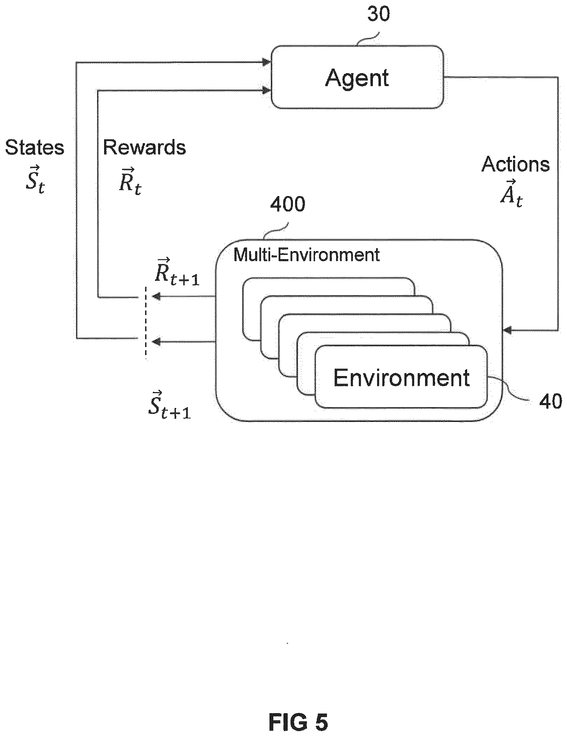

In some exemplary embodiments, such a memory buffer as mentioned above may be used to run multiple experiments in parallel and collect all the experiences in the memory buffer. To make the agent 30 explore new possible actions, a noise may be added to the actions, where the noise may decay over time to make the agent 30 explore more in the beginning and exploit the environment 40 more in the end. In this manner, the same agent 30 can interact with multiple versions of the exact same environment 40 and the state, but a variety of actions being taken as a result of the exploration-noise. **Fig. 5** shows a schematic diagram illustrating such a multi-environment interaction for a reinforcement learning agent. In Fig. 5, for each timestep t, the agent 30 may output a vector of actions from a vector of states.

In some variations of deep reinforcement learning, only one of the actor network 32 or the critic network 34 (see Fig. 4) is employed and a heuristic algorithm is used for the other role.

c) Supervised Learning

In some exemplary embodiments, supervised learning may be employed as the machine learning algorithm. In the supervised learning algorithm, states (e.g., including values of the one or more state parameters) and corresponding actions (e.g., including values of the one or more control parameters) taken according to a policy made by a human expert may be collected and used for training a policy network (e.g., corresponding to the "actor" of the actor-critic method described above) to mimic the actions taken by the human expert. Such a training may be performed using multiple expert policies across a range of chromatographic beds (e.g., columns) exhibiting variability in binding capacity, for example, for obtaining a policy that can adapt to new situations.

In some exemplary embodiments, supervised learning may be combined with deep reinforcement learning.

For example, the actor network 32 may be first trained to mimic expert policies with the supervised learning algorithm and then use the trained actor network 32 in the deep reinforcement learning setting (e.g., as shown in Fig. 4) to further explore and learn.

In further exemplary embodiments, the actor network 32 may be trained with access to both the environment interactions and expert policy state-action pairs, for instance, with a high degree of sampling from the expert systems experiences in the beginning and almost exclusively with environment interactions later in the training. This approach may be also referred to as imitation learning.

d) Imitation Learning

In case a policy made by a human expert as mentioned above with regards to supervised learning is available, imitation learning may be employed as the machine learning algorithm in some exemplary embodiments. In the imitation learning algorithm, an agent may be trained to take the same action as the expert policy given a certain state via the supervised learning algorithm.

In some circumstances, combining imitation learning using expert policies from simulated data and real data obtained by physically performing the chromatography process together with deep reinforcement learning may be advantageous for bridging a gap between training using the real data (e.g., obtained by physically performing the chromatography process) and training using the simulated data in a data-efficient manner.

e) Transfer Learning

In some exemplary embodiments, transfer learning may be employed as the machine learning algorithm. In the transfer learning algorithm, knowledge gained while solving a problem can be applied to solving a different but similar problem.

Thus, in the context of generating a policy for controlling a chromatography system, a reinforcement learning agent may be first pre-trained using state-action pairs obtained by simulating a chromatography process and then, with the knowledge gained during the pre-training, the agent may be further trained using state-action pairs obtained by physically performing the chromatography process by the chromatography system. The pre-training and the further training may be performed according to deep reinforcement learning, supervised learning, or a combination of the both, for example. By pre-training the agent as much as possible using the simulated data, the need of training using the real data by physically performing the chromatography process can be reduced. This may facilitate control of and/or improve overall efficiency for controlling a chromatography system that is configured to physically perform the chromatography process, since expensive runs of the chromatography device for training the agent can be decreased.

**Control Process Flow**

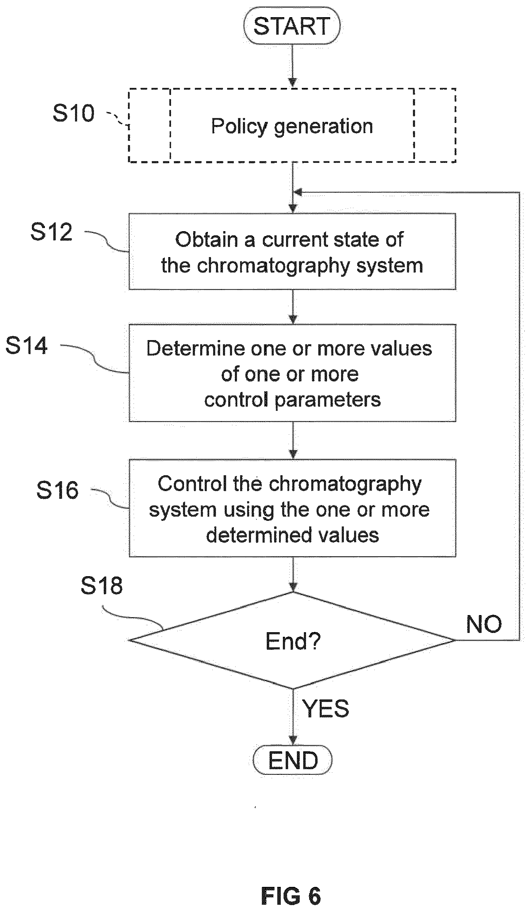

**Fig. 6** shows a flowchart showing an exemplary process performed by the control device 20 shown in Fig. 1. The exemplary process shown in Fig. 6 may start, for example, when the control device 20 receives a user instruction to start the exemplary process and/or when the control device 20 receives notification from the chromatography system 10 that the chromatography system 10 is starting a chromatography process.

At step S10, the control device 20 may generate a policy for controlling the chromatography system 10. The policy may map a state of the chromatography system 10 represented by one or more values of the one or more state parameters obtained from the chromatography system 10 at a given point in time to an action representing one or more values of the one or more control parameters for controlling the chromatography system 10.

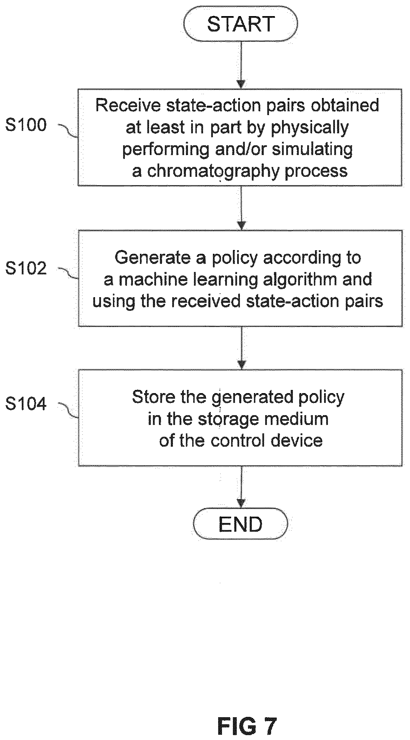

**Fig. 7** shows a flowchart showing an example of the detailed process for step S10 of Fig. 6. At step S10 of Fig. 6, the control device 20 may perform the exemplary process shown in Fig. 7.

Referring to Fig. 7, at step S100, the control device 20 may receive state-action pairs obtained at least in part by physically performing and/or simulating a chromatography process. For example, the processor 202 of the control device 20 may receive state-action pairs recorded while the chromatography system 10 physically performed and/or simulated the chromatography process. Such state-action pairs may be received directly from the chromatography system 10 and/or from another computing device such as a database server that is configured to collect and store the state-action pairs from the chromatography system 10. Additionally or alternatively to the state-action pairs originating from the chromatography system 10, the processor 202 may receive state-action pairs according to a policy made by a human expert. The state-action pairs according to an expert policy may be received from a computing device other than the chromatography system 10, for example.

Each of the state-action pairs received at step S100 may comprise a state including one or more values of the one or more state parameters as described above and an action taken in response to the state, the action including one or more values of the one or more control parameters as described above. The state-action pairs received at step S100 may be stored in the storage medium 204 of the control device 20.

After step S100, the exemplary process of Fig. 7 may proceed to step S102.

At step S102, the control device 20 may generate a policy according to a machine learning algorithm, using the received state-action pairs. The machine learning algorithm may be any one of the exemplary algorithms as described above. For instance, the processor 202 of the control device 20 may generate the policy by training a reinforcement learning agent according to the deep reinforcement learning algorithm as described above with reference to Figs. 3 to 5. Further, for example, in case state-action pairs according to the expert policy as mentioned above have been received at step S100, the processor 202 may generate the policy according to the supervised learning algorithm as described above.

After step S102, the exemplary process of Fig. 7 may proceed to step S104.

At step S104, the control device 20 may store the generated policy in the storage medium 204 of the control device 20. After step S102, the exemplary process of Fig. 7 may end and step S10 of the exemplary process shown in Fig. 6 may end.

Referring again to Fig. 6, the exemplary process may proceed to step S12 after step S10.

At step S12, the control device 20 may obtain a current state of the chromatography system 10 from the chromatography system 10. For example, the current state may be collected by the processor 104 of the chromatography system 10 and the processor 202 of the control device 20 may receive the current state from the processor 104. The current state may include one or more values of the one or more state parameters at the current point in time. Values of the same set of the state parameters may be included in the current state and in the state of each state-action pair used for generating the policy at step S10. The one or more state parameters may include one or more quantities of one or more substances present in the chromatography system, as also stated above. Further, the one or more state parameters may additionally include one or more of any other examples of the state parameters as described above with reference to Fig. 1.

After step S12, the exemplary process may proceed to step S14.

At step S14, the control device 20 may determine one or more values of the one or more control parameters according to the policy generated at step S10. For example, the processor 202 of the control device 20 may identify an action that is mapped to the current state by the policy and use one or more values of the one or more control parameters included in the identified action as the determined values. Values of the same set of control parameters as in the action of each state-action pair used for generating the policy at step S10 may be determined at step S14. As also stated above, the one or more control parameters may include at least: a position of a valve comprised in the chromatography system 10 and/or a pump speed of a pump comprised in the chromatography system 10. Additionally, the one or more control parameters may include one or more of any other examples of the control parameters as described above with reference to Fig. 1.

After step S14, the exemplary process may proceed to step S16.

At step S16, the control device 20 may control the chromatography system 10 using the one or more determined values of the one or more control parameters. For example, the processor 202 of the control device 20 may generate one or more control signals representing the one or more determined values of the one or more control parameters to instruct the chromatography system 10 to set the determined values for the control parameters. The processor 202 may communicate the generated control signals to the chromatography system 10. In response, the chromatography system 10 may set the one or more control parameters to the one or more determined values, following the one or more control signals, as described above with reference to Fig. 1.

After step S16, the exemplary process may proceed to step S18.

At step S18, the control device 20 may determine whether or not to end the exemplary process. This determination may be based on whether or not a specified termination condition is met. For example, in case the chromatography system 10 is configured to notify the control device 20 when the chromatography process has ended, the specified termination condition may be whether or not the chromatography system 10 has notified the end of the chromatography process. Further, for example, the specified termination condition may be that a specified duration of time has passed since the start of the chromatography process. Further, for example, the specified termination condition may include a condition relating to at least some of the state parameters. Alternatively or additionally, the specified termination condition may include one or more conditions concerning one or more events relating to safety, facility conditions, production halts, etc. Occurrence of such events may be detected using, for example, external sensor data obtained from one or more sensors that are provided on one or more devices and/or facilities external to the chromatography system 10.

In case it is determined not to end the exemplary process (NO at step S18), the process may return to step S12.

In case it is determined to end the exemplary process (YES at step S18), the process may end.

In some exemplary embodiments, the control device 20 does not necessarily perform the policy generation step S10 of Fig. 6. For example, the policy generation step S10 may be performed by a computing device other than the control device 20. In such a case, the control device 20 may obtain the generated policy from the computing device and then perform steps S12 to S18 of Fig. 6 to control the chromatography system 10.

### Case Study 1 - Experiments

As a case study, experiments were made using deep reinforcement learning in the context of controlling a chromatography system to successfully capture and purify monoclonal antibodies (mAb). This case study 1 is focused on handling simulated data of the chromatography process.

Bind-elute process chromatography may be considered as one of the primary downstream purification unit operations in most biopharmaceutical manufacturing processes. In these units, media to be processed may be passed through a column containing a fixed, solid phase (often resin beads) with binding sites that chemically retain the product of interest. When most of the binding sites have been filled, impurities left unbound in the column may be washed away. Finally, the conditions of the column (often pH or salinity) may be changed, causing the binding to reverse and the purified product to be released, in other word, eluted.

Process chromatography unit operations in manufacturing facilities are typically operated in batch mode where a series of phases are repeated following a predefined (thus, not adapted) recipe. A typical recipe may involve preparing the column with a wash step, "loading" the column with the product, washing impurities, eluting product, and cleaning the column before the cycle. starts again. The flow rates of materials and duration of each of these steps is typically determined by a combination of experimental work and historical process knowledge. For instance, the capacity of the column at different flow rates is often determined by conducting so called break-through experiments where, in each trial, a solution of known product concentration is fed at a constant flow rate until the concentration of product leaving the column is equal to the concentration of product being fed. From break-through experiments, the "optimal" flow rate and loading duration for a given product concentration can be estimated.

The "optimal" flow rate and loading duration may change with column variability and decreased capacity from usage. The method for controlling a chromatography system according to the present disclosure can take such variability into account and adapt the control scheme based on the real-time monitored data of the chromatography process.

a) Simulation Environment

In this case study 1, a simulated environment was used for the ease of running many experiments in a short amount of time. The simulation system was coupled with a deep reinforcement learning algorithm that was tasked with learning how to control the process in a manner that separates the sought product (e.g., the target compound, mAb) from the rest of the media.

Specifically, in this case study 1, the exemplary simulation environment 50 shown in Fig. 2 was employed. As mentioned above with reference to Fig. 2, the simulation environment 50 describes a single column system to model a bind-elute process of a liquid chromatography process. Thus, in this case study 1, the processor 104 and the storage medium 106 of the chromatography system 10 (see Fig. 1) implemented the exemplary simulation environment 50 shown in Fig. 2. Further, experiments were made to generate a policy for the control device 20 and to control the chromatography system 10 according to the generated policy.

b) Machine Learning Algorithm and the Reward Function

As also stated above, deep reinforcement learning was employed in this case study 1. Specifically, the TD3 algorithm described above with reference to Fig. 4 was used for generating the policy. Further, the agent was trained with the multi-environment setting as described above with reference to Fig. 5.

In this case study 1, the state S comprised a vector containing concentration values of mAb (e.g., the target compound), spent media (SM), elution and wash going into the flow controller and out from the column. Mass transfer through the column inlet and outlet was also calculated using the concentration data of the phases at the inlet/outlet together with a total system flow rate. The calculated mass transfer was supplied to the agent as additional observation data. The calculation of the initial state may require knowledge of starting concentrations in feed and elution volumes. In the experiments in this case study 1, the values in the state S were normalized to put them into a range closer to [0, 1] since the original concentrations were in the magnitude of $1e^{-6}$ and such a normalization can be advantageous for neural network performance.

Further, in this case study 1, the action comprised a vector with values between [-1, 1] (TanH activation) that is normalized into the range [0, 1] and used to control the valves and flow rates of the chromatography system (see e.g., Fig. 2, chromatography system simulation 500). More specifically, the actions corresponded to valve and pump control for feed, elute and wash media as well as the output valve 530 that controls the media flow out of the column either to the waste vessel 542 or the product vessel 540.

There may be multiple ways to construct and utilize a reward function for the deep reinforcement learning algorithm. For instance, for a game of chess, it might be sufficient to give the agent a reward of -1 for a loss and a reward of +1 for a win at the end of an episode, and rewards for all states up to that point being set to 0. In this case study 1, a reward for each state was calculated and then subtracted from previously recorded reward to obtain a reward that reflects the changes made on a step-by-step basis, as can be represented by the following expression:

$$\Delta_{reward} = reward_{\{t\}} - reward_{\{t-1\}}.$$

For this case study 1 to control the chromatography system, the reward function had to take multiple factors into consideration. First and foremost, the aim of the chromatography process may be to separate out the product (e.g., the target compound such as mAb) into the product vessel 540 and the waste (e.g., the rest of the media, in other words, spent media)'into the waste vessel 542. For a smooth reward function, it may be important to not only give a reward for the product (e.g., the target compound, in this case study 1, mAb) arrives in the right place (e.g., the product vessel 540), but also punish the agent when the agent puts the product in the wrong place (e.g., the waste vessel 542). This may be reflected by the following terms:

$$\Delta tc = tc_{prod} - tc_{waste},$$

and

$$\Delta sm = sm_{waste} - sm_{prod}.$$

where $tc_{prod}$ may indicate the quantity of the target compound (e.g., mAb) in the product vessel 540, $tc_{waste}$ may indicate the quantity of the target compound in the waste vessel 542, $sm_{waste}$ may indicate the quantity of the waste (e.g., the spent media) in the waste vessel 542 and $sm_{prod}$ indicates the quantity of the waste in the product vessel 540. At first, these two terms were combined to generate a reward function as follows:

$$Reward = (M \times \Delta tc + \Delta sm),$$

where M may be a factor indicating how much more the waste is used in the chromatography process as compared to the target compound. In other words, the term $\Delta tc$ was multiplied by M since there was M times more waste in the system. In the experiments for this specific case study 1, M = 5. By experimental work, this initial reward function turned out to be not sufficient to obtain desired behaviors of the agent. Specifically, with this initial reward function, the agent obtained a much higher score than a perfect separation of the two compounds but at the cost of a low purity of the product. This may be because, although a perfect separation entailed that less feed be put into the system after loading, the absolute reward for the agent was greater if the agent just kept feeding high since that accumulated more product in the end.
Accordingly, a multiplication with the following purity term *pure* was introduced to the reward function:

$$pure = max\left(\frac{tc_{prod}}{tc_{prod} + sm_{prod}}, x\right).$$

The purity term *pure* indicated above had a minimum value of x = 0.1 in this specific case study 1 but can increase as the purity of the product, mAb, in the product vessel 540 increases. The purity term *pure* was introduced in this specific case study 1, because it was noted that without this term the agent had difficulty starting learning and the minimum value of x = 0.1 was chosen as a value providing best results after testing with different values, e.g., x = 0.1, 0.2, 0.3, etc. The reward function with the purity term *pure* may be expressed as follows:

$$Reward = (M \times \Delta tc + \Delta sm) \times pure \, .$$

The above-stated reward function with the term *pure* introduced another interesting behavior of the agent. Specifically, the agent started putting all the target compound, mAb, in the column 520 and never washing it out, only accumulating score from the waste being correctly placed in the waste vessel 542 and not putting anything in the product vessel 540. To account for such a behavior, the following additional punishment p for the target compound left in the column 520 was introduced:

$$p = \begin{cases} tc_{col} & if\ tc_{col} > t \\ 0 & otherwise \end{cases},$$

where $tc_{col}$ is the quantity of the target compound, mAb within the column 520 and t is a specified threshold value. The punishment is posed if more than the threshold value t of the target compound, mAb, is in the column 520 at the end of the run (e.g., episode). To further give an explicit reward for each unit of "clean" target compound in the product vessel 540, the following clean term c was added:

$$c = max\big(tc_{prod} - sm_{prod},\ 0\big).$$

Accordingly, a final reward function may be defined as follows:

$$Reward =\ (M \times \Delta tc + \Delta sm) \times pure + c - p \times done,$$

wherein *done* is set to 1 in case of a terminal state of the chromatography process and set to 0 otherwise, which may lead to punishing the agent for the mAb left in the column 520 at the end if the amount of the mAb is above the specified threshold t. In the experiments in this specific case study 1, the reward was further multiplied with a factor of $1e^6$ to put the reward into a reasonable scale.

c) Training

In the experiments of this specific case study 1, for training the agent, the critic network 34 and the actor network 32 (see Fig. 4) were initiated with two convolutional layers connected with a hidden fully connected layer comprising 300 neurons. The convolutional layers processing the input was provided to support a concatenated representation of the input states across time. Using convolutional layers in this manner is often referred to as temporal convolutional networks (TCN) and is a common way to work with time-series data. Improved performance was seen with the TCN compared to a fully connected network with only 1 observation timepoint as the input. The first layers were parametrized with channels 128 and 64, a kernel size of 3, and a stride of 1. The output of the second layer was flatten and then propagated to the fully connected third layer that propagated the signals to a fully connected output layer.

Both the actor network 32 and the critic network 34 involving the TCN in this case study 1 take a normalized vector representing the simulator states (e.g., states provided by the chromatography system 10 performing the simulation of the chromatography process) as time-series input. The critic network 34 also merges, with a state vector, a vector representing an action in to the third (fully connected) layer. This can be done by concatenating the output of the second hidden layer (convolutional) with the action vector, each using ReLU (rectified linear units) activations (see also, e.g., Fujimoto et al., "Addressing Function Approximation Error in Actor-Critic Methods", Proceedings of the 35th International Conference on Machine Learning, Stockholm, Sweden, PMLR 80, 2018, URL: https://arxiv.org/abs/1802.09477).

In this case study 1, the output of the actor network 32 is a vector representing the actions that can be taken in the simulated chromatography process based on the input state. Further, in this case study 1, the output of the critic network 34 is a single value representing the Q-value (estimated future rewards) based on the state-action pair that was propagated through the critic network 34.

Both the actor network 32 and the critic network 34 involving the TCN in this case study 1 were trained using gradient decent with the ADAM optimizer (see e.g., Kingma et al., "Adam: A Method for Stochastic Optimization", published as a conference paper at the 3rd International Conference for Learning Representations, San Diego, 2015, URL: https://arxiv.org/abs/1412.6980). For both the actor network 32 and the critic network 34, a learning rate of $3e^{-4}$ was used. A priority-experience memory buffer was used to store historical experiences - tuples in the format of (state$_t$, action$_t$, reward$_t$, state$_{t+1}$, action$_{t+1}$) with a buffer size of $1e^6$. The memory buffer was sampled for 6 times each fourth interaction with the environment. Each sampling was done with a batch size of 200 (number of experiences) and was used to train the networks to better approximate the correct policy (action) and Q-value. The actor network 32 was trained every other sampling while the critic network 34 was trained every time a sampling took place, a technique that was introduced by the TD3 algorithm as an improvement over DDPG.

In the experiments of this case study 1, the training was done for 1000 episodes with each episode containing 4 simulations running in parallel for 160 iterations (amounting to 4000 simulation runs in total). Each simulation run approximated a chromatography device interacting with the agent every 10 seconds for a total of 1600 seconds. The best model was saved for each run and used to plot and evaluate the performance.

d) Evaluation

To evaluate the performance, the reward defined by the final reward function as stated above was calculated for the agent and a benchmark. The amount of mAb, the target compound, captured in the product vessel 540 and waste vessel 542 as well as the purity of the mAb in the product vessel 540 were compared between the agent and the benchmark.

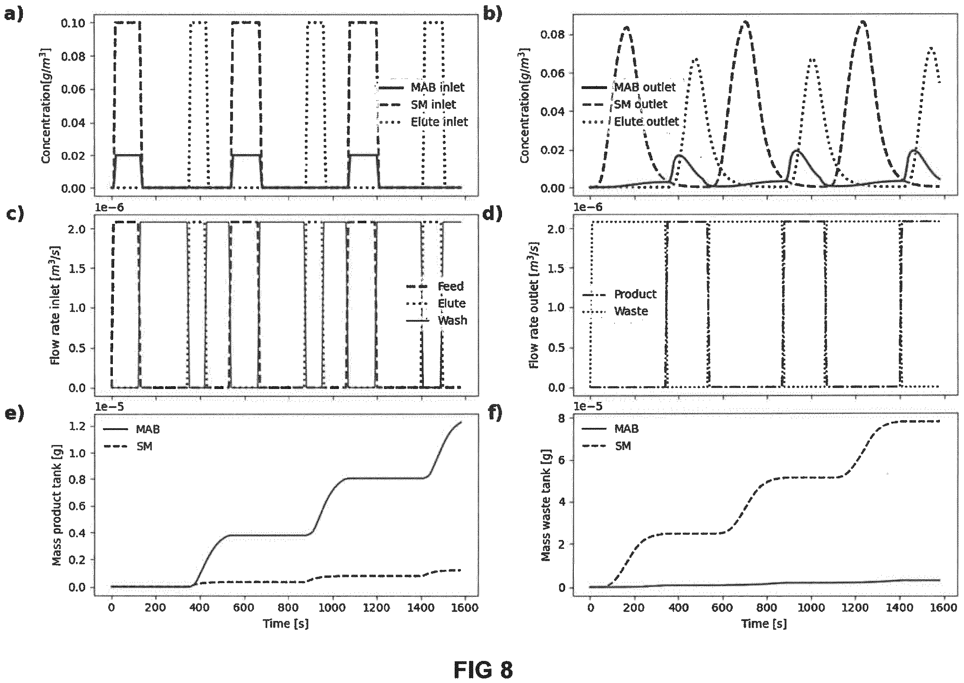

Fig. 8 shows an exemplary benchmark human-made policy to separate mAb protein and spent media for controlling an exemplary chromatography system. Figs. 8(a) and 8(b) show the mAb, SM (spent media) and elute concentrations of the column inlet and outlet, respectively. In other words, Figs. 8(a) and 8(b) show the internal states of the chromatography system. The inlet concentrations of mAb and SM were governed by their concentrations in the feed vessel 510. Fig. 8(c) shows the controllable flow rates of feed, elute, and wash into the column 520. Fig. 8(d) shows the flow rate out of the column 520, either going into the product vessel 540 or waste vessel 542, which can be switched by controlling the output valve 530. Thus, Figs. 8(c) and 8(d) represent actions taken for controlling the chromatography system. Figs. 8(e) and 8(f) show the mass of mAb and SM in the product vessel 540 and the waste vessel 542 over time, respectively. In other words, Figs. 8(e) and 8(d) show the resulting separation of the product, mAb and the waste.

Table 1 below shows comparison of an agent derived policy against a human made benchmark.

**Table 1**

|  | Agent | Benchmark |
|---|---|---|
| Score | **328.4** | 220.8 |
| mAb in the product vessel (1e-5 g) | **3.042** | 1.23 |
| mAb in the waste vessel (1e$^{-5}$ g) | 1.515 | **0.127** |
| Clean % | 67 | **91** |

The "score" shown in Table 1 is a value calculated with the final reward function as stated above for training the agent. Table 1 also shows the amounts of mAb captured in the product vessel 540 and the waste vessel 542 as well as how clean the mAb in the product vessel 540 was (concentration of mAb).

The best performing agent selected from the training in the experiments of this case study 1 was trained for 657 episodes with a score of 328.4. The selected agent generated a score higher than the human made benchmark, as shown in Table 1. It might be due to the fact that the agent captured more mAb in the given time, even if it is not as clean as in the benchmark model (67% versus 91%), as can be seen from Table 1.

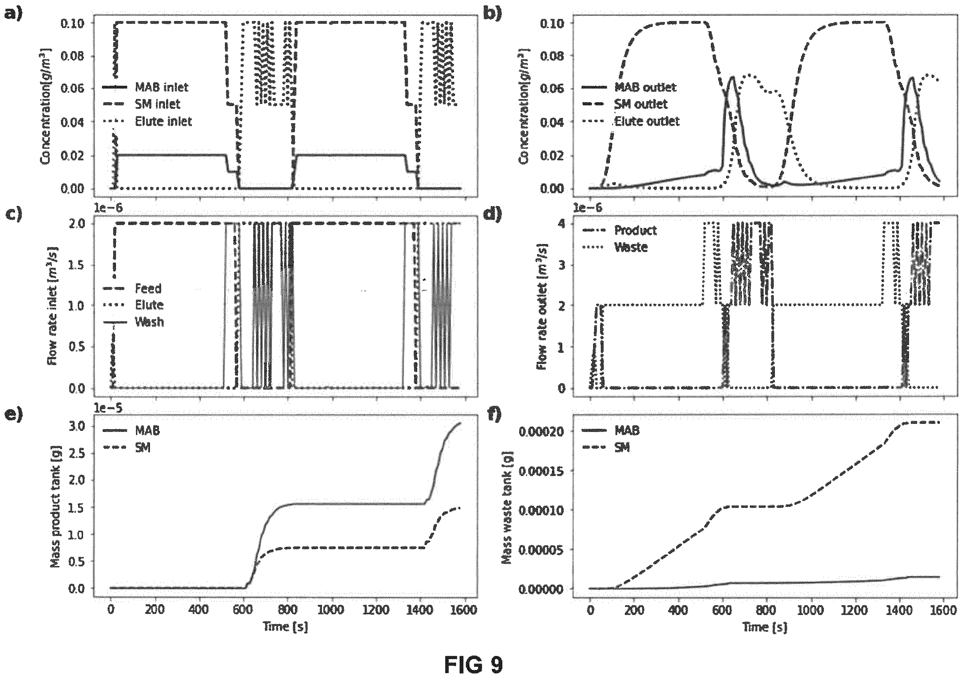

**Fig. 9** shows a control process of the exemplary chromatography system, performed by the selected agent. Figs. 9(a) and 9(b) show concentrations of mAb, SM and elute at the column inlet and the column outlet, respectively. Fig. 9(c) shows the column inlet flow rates of the feed, elute and wash media, which the agent can control. Fig. 9(d) shows the column outlet stream either to the product vessel 540 or to the waste vessel 542, which the agent can control by controlling the output valve 530. Figs. 9(e) and 9(f) show the amounts of mAb and the SM in the product vessel 540 and the waste vessel 542, respectively.

From Figs. 9(e) and 9(f), it may be observed that the agent has learned a policy which separates the SM into the waste vessel 542 and mAb into the product vessel 540. Even if the separation may not be perfect, Fig. 9(c) shows that the agent can exhibit behavior associated with classical chromatography policies with a loading phase (in which the feed flow rate is high, while the wash and elute flow rates are low), followed by a wash phase and an elute phase. Fig. 9(c) even shows these phases in a cyclical behavior similar to that of the benchmark policy shown in Fig. 8(c). As can be seen from Figs. 9(c) and 9(d), the generated phases were controlled in sync with the output valve 530 directing the feed to the waste vessel 542 during the loading phase and the wash phase and redirecting it to the product vessel 540 during the elute phase. Figs. 9(a) and 9(b) clearly show how the agent has manipulated the chromatography system to change the concentrations of mAb and SM from the original feed mixture concentration (see Fig. 9(a)) to phases with either mAb or SM in the outlet of the column 520 (see Fig. 9(b)).

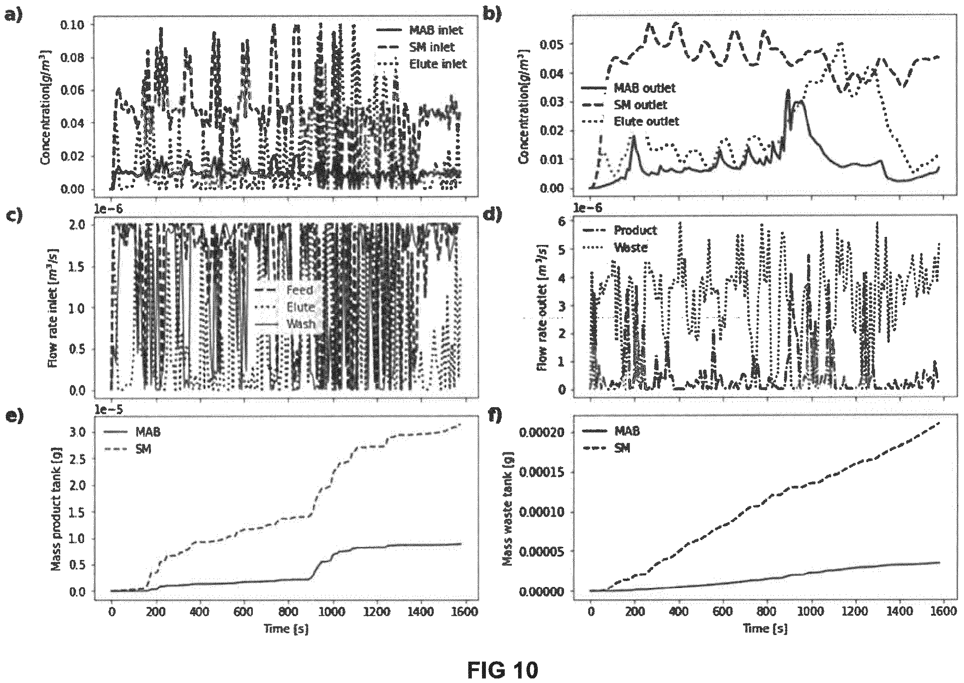

The behavior of the selected agent shown by Fig. 9 can be contrasted to the behavior of an earlier agent only trained for 10 episodes and with a score of 14. **Fig. 10** shows a control process of the exemplary chromatography system, performed by such an earlier agent after training for 10 episodes. Figs. 10(a) and 10(b) show concentrations of mAb, SM and elute at the column inlet and the column outlet, respectively. Fig. 10(c) shows the column inlet flow rates of the feed, elute and wash media, which the agent can control. Fig. 10(d) shows the column outlet stream either to the product vessel 540 or to the waste vessel 542, which the agent can control by controlling the output valve 530. Figs. 10(e) and 10(f) show the amounts of mAb and the SM in the product vessel 540 and the waste vessel 542, respectively. As can be seen from Figs. 10(c) and 10(d), the earlier agent exhibits a much more erratic and "random" behavior, with little to no separation of mAb and SM (see Figs. 10(e) and 10(f)), as compared to the behavior of and the separation achieved by the selected agent as shown in Figs. 9(c) to 9(f), which presents a sharp contrast in how much learning has taken place.

The results of experiments of this case study 1 as described above with reference to Figs. 8 to 10 show that a reinforcement learning agent can successfully learn how to generate a control policy by interacting with a simulated chromatography device and without any prior knowledge, starting from completely random actions to a complex control scheme. Although the agent in this case study 1 did not manage to generate as clean mAb as the human-made policy, the agent still managed to generate a higher score by collecting more product (mAb) in a fixed amount of time. Modifying the reward function might lead to further improvements with regards to the purity of the collected product.

It is highlighted that the agent exhibited the cyclical behavior and that the policy generated by training the agent (see Figs. 9(c) and 9(d)) includes phases similar to the phases used in current chromatography policies such as the one shown in Figs. 8(c) and 8(d). When the agent loads the column up with feed, the mAb will start to leak when it comes close to the column binding capacity. The agent seems to have found a structured and cyclical behavior as it approached this challenge.

Accordingly, the experiments in the case study 1 show that the method and/or system according to the present disclosure can automatically generate a policy that allows control of a chromatography process for the whole duration of the process, including the timings when the media flowing into the one or more chromatographic beds and/or different vessels (e.g., product and waste vessels) are switched.

The policy generated using data obtained from the simulation of the chromatography process as in this case study 1 may be used for controlling one or more chromatography devices that are configured to physically perform the chromatography process and that have corresponding components as in the simulation environment.

## Case Study 2 - **Experiments with Column Variability**

The case study 1 as described above shows capabilities of deep reinforcement learning (RL) algorithms to operate a simulated chromatography system after learning from interacting with the simulated chromatography system.

As a further case study, in this case study 2, it is further investigated how a deep RL agent according to the present disclosure can learn to operate a simulated liquid chromatography systems with random variability introduced to the chromatography columns. Today, users of liquid chromatography are often required to do experiments to find out the binding capacity of the columns to adjust the process based on column variability. The variability can come from manufacturing conditions as well as usage over time.

A hypothesis used in this case study 2 is that a deep RL agent according to the present disclosure can adapt to column variability and be able to control the chromatography system by acting on the measured signals. To test this hypothesis, a test set of columns was generated with randomized properties that influence the binding capacity. The agent was then trained on randomly initialized columns and evaluated on the predefined test columns. The results stated below show a promising capability of the RL agent to successfully control and adapt to chromatography systems with variability in column capacity.

In the following, experimental setting and results of the case study 2 will be described with a focus on differences as compared to the case study 1.

a) Column Variability

To model column variability, a set of test-columns with varying performance was created. In these columns, selected parameters were adjusted to create unique simulation environments. Randomized parameters for columns were generated by adding the product of the initial value scaled with a uniformly distributed error:

$$f(x) = x + x \cdot S \cdot X$$

Here, $X-U(-1,1)$ is a uniformly distributed random variable, $S$ is a scaling variable and $x$ is some input parameter. In the experiments of the case study 2, the axial dispersion, radial dispersion, column porosity and resin porosity were subjected to this treatment. The scaling term was kept common for all test-columns thereby incorporating a maximum relative deviation for each parameter. Then environment variation was achieved by sampling from X and multiplication with an error term.

Eight test columns were generated with seven of them sampled from the above random initiation with a scaling of 5% ($S = 0.05$) and one test column initiated like the one in the above case study 1.

b) Simulation

To represent binding interactions between solute components and stationary phase, an adaption of a mobile phase modulator Langmuir model (see Karlsson et al., "Model-based optimization of a preparative ion-exchange step for antibody purification", Journal of Chromatography A, Vol. 1055, Issues 1-2, November 5, 2004, p. 29-39, URL: https://doi.org/10.1016/j.chroma.2004.08.151) was used. This creates a dependency on elute buffer concentration for mAb concentration in the stationary phase. This dependency is evaluated for each individually modelled particle along the column axis. The interaction is governed by the following equation:

$$\frac{dq_{mAb}}{dt} = k_{a,mAb} e^{\gamma c_{p,elute}} c_{p,mAb} \left( q_{max,mAb} - q_{mAb} \right) - k_{d,mAb} c_{p,elute}^{\beta} q_{mAb}$$

Here, $q$ is stationary phase concentration, $c_p$ is mobile phase concentration of stagnant fluid in particles, $q_{max}$ is saturation constant, $k_a$ and $k_d$ are adsorption/desorption rate constants and $\beta$ and $\gamma$ are modulation constants. It was assumed that only mAb, the target compound, can bind to the stationary phase and elute buffer concentration is the only component that influences this interaction.

c) RL agent

At first, the new environment with randomly initialized columns were ran with the same deep RL agent settings as the case study 1 but without success. It was observed that the agent could rather easily reach a certain concentration around 35% and then had a hard time progressing further. The reward function was therefore modified from the one used in the case study 1, defined as:

$$Reward = (M \times \Delta tc + \Delta sm) \times pure + c - p \times done.$$

Further details of the reward function used in the case study 1 are described above in section b) "Machine Learning Algorithm and the Reward Function" of the case study 1.
For modifying the reward function used in the case study 1, a new term *pure_reward* was introduced. The new term *pure_reward* gave a linearly increasing score based solely on purity (ignoring the amount of product) after the 30% mark.

$$pure\_reward = \max\left(\frac{pure - 0.3}{0.7}, 0\right).$$

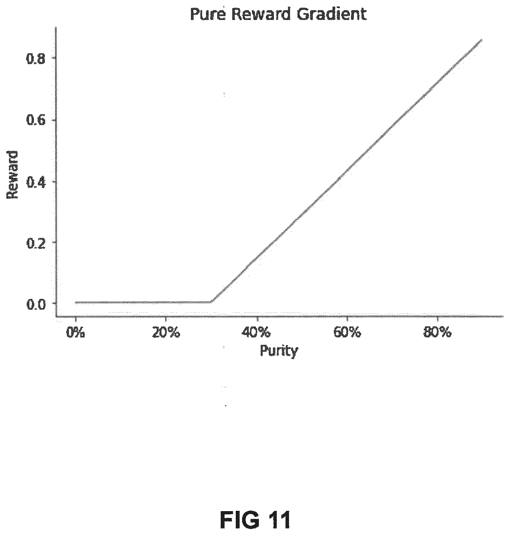

This term was theorized to help the agent get over the hurdle of the purity ceiling it was reaching and the reward from this term can be seen on **Fig. 11.**
The **pure_reward** term was scaled with a factor of 100 when used to calculate the total reward to play a more important role in the overall reward, making the following new reward equation:

$$Reward = (M \times \Delta tc + \Delta sm) \times pure + c + pure\_reward \times 100 - p \times done.$$

As in the case study 1, the factor M was set to M = 5 also in this case study 2. This new equation showed good results in overcoming the purity ceiling previously observed. Further performance increases were gained by normalizing the observed states for the agent into the range of [0,1]. This was done by experimentally running the chromatography simulator and identifying the highest values of the different measurements and then dividing the state vector with those max values.

d) Training

In this case study 2, the training employed the same TD3 agent as the case study 1 but modified the number of episodes to 2000 running on 8 parallel simulated environments. The simulated time was increased to 3000 sec with the agent interacting with the environment every 15 sec, totalling 200 timesteps per episode. Both the actor network 32 and the critic network 34 were initiated with a learning rate of $4e^{-4}$, with the network weight updated four times in a row with a frequency of each forth interaction with the environment. The batch size (e.g., number of experiences) used to update the network each time was set to 200. While training, the column parameters were randomly initiated for each new episode according to the method described in the above section a) "Column Variability", with a scaling factor $S$ of 0.2.

e) Results and Evaluation

When evaluating the RL agent trained on randomly initialized columns on the predefined test columns, average purity (across all test columns) of 81% was observed, which can be compared to a human benchmark with a purity of 99.12% (see Table 2 below). Yet the RL agent manages to generate a higher reward score of 36.29 while the human benchmark achieves 26.78. Further, it can be observed that the RL agent has a much higher productivity with a yield of 1.33 $e^{-5}$ g of mAb while the human policy has a yield of 0.59 $e^{-5}$ g of mAb. This translated to an increase of productivity of 125% for the RL agent at the cost of purity. Based on these findings, it can be concluded that the high productivity by the RL agent equates to a higher reward than the human policy even if it has 18% points lower purity.

Table 2 below shows comparison of an agent trained in an environment using column with random initializations against a human made benchmark policy over a pre-defined test-set of 8 columns.

**Table 2**

|  | Agent (mean random) | Benchmark (mean random) |
| --- | --- | --- |
| Score | 36.29 | 26.78 |
| mAb in the product vessel (1e-5 g) | 1.33 | 0.59 |
| Spent media in the product vessel (1e$^{-5}$ g) | 0.32 | 0.0052 |
| mAb in the waste vessel (1 $e^{-5}$ g) | 0.15 | 0.073 |
| Purity % | 81.01 | 99.12 |
| Recovered cycled mAb % | 89.63 | 88.94 |
| Recovered total mAb % | 66.3 | 29.61 |

In the above Table 2, the "score" is a value calculated with the defined reward function for the agent training. The amounts of mAb captured in the product vessel 540 and the waste vessel 542 are also shown in Table 2. Table 2 further shows how pure the mAb in the product vessel is (concentration of mAb / (sm + mAb)). Recovered cycled mAb in Table 2 indicates how much of the target protein was recovered in the product vessel 540 after cycling the feed stock. Recovered total mAb in Table 2 indicates how much target protein was recovered in relation to initial target protein mass in the feed vessel 510.

Looking into how the agent controls and affects the simulated chromatography system can facilitate understanding of the behavior of the agent.

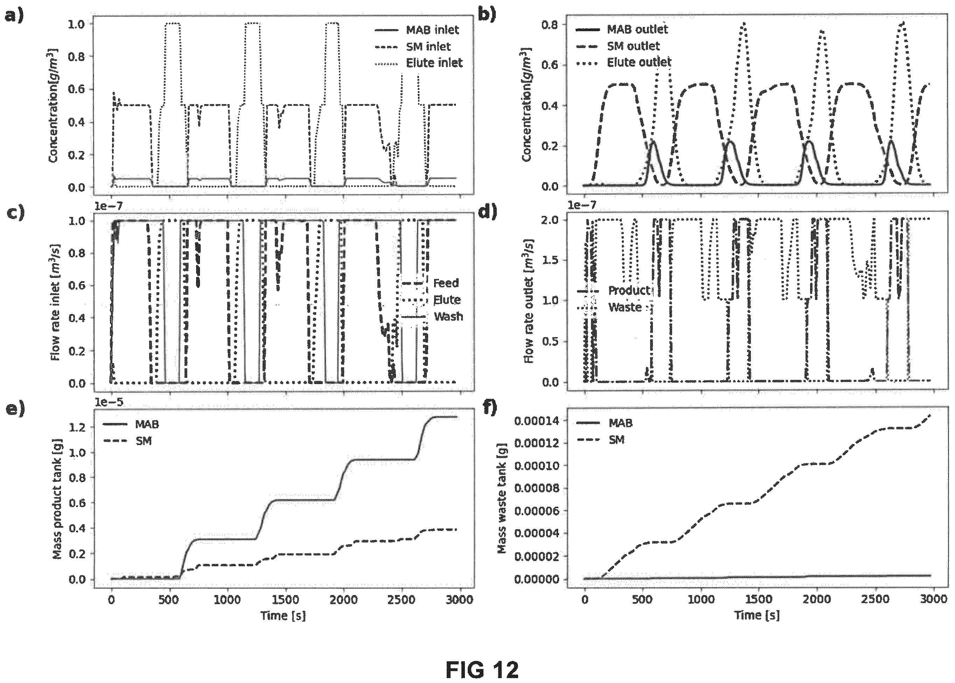

**Fig. 12** shows a control process of a simulated chromatography device by an RL agent in this case study 2. Figs. 12(a) and 12(b) show the column inlet and outlet concentrations of mAb, spent media (SM) and elute, respectively. Fig. 12(c) shows the column inlet flowrates of feed, elute and wash, which the agent can control. Fig. 12(d) shows the column outlet stream to either the product vessel 540 or the waste vessel 542, which the agent can control by controlling the output valve 530. Figs. 12(e) and 12(f) show how much mAb and spent media end up in the product vessel 540 and waste vessel 542, respectively.

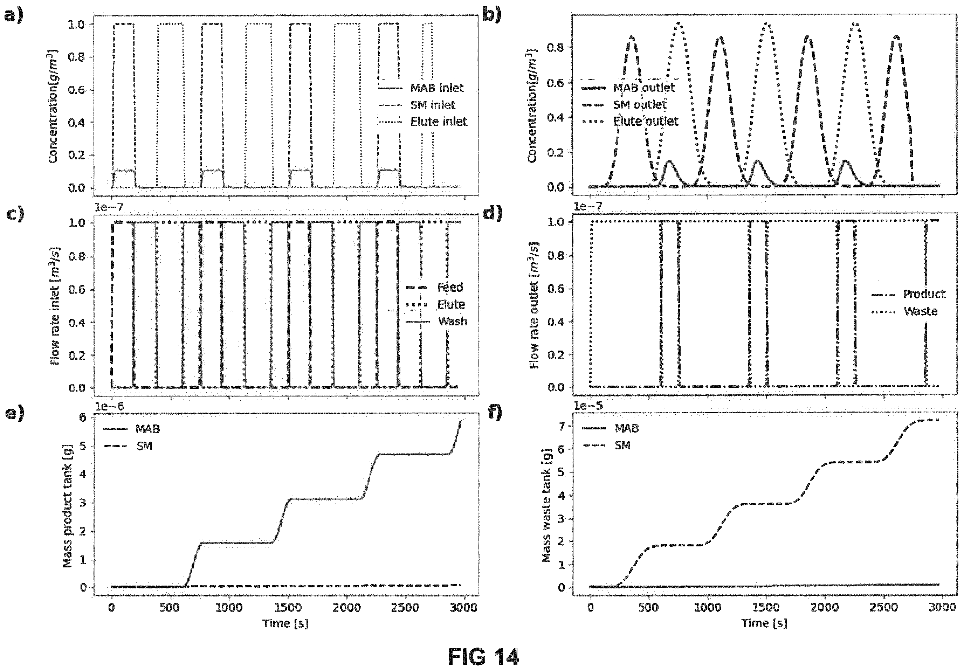

In **Fig. 12,** the agent is acting on a system with the same column as in the initial use case in case study 1 described above (cf. Fig. 9). For example, it can be seen, from Fig. 12(c), a more well-behaved cyclical pattern in the flow rate control, which is less erratic than the RL agent of the case study 1 in its control scheme (cf. Fig. 9(c)). From Fig. 12(c), the agent seems to conclude four load-wash-elute cycles, within the designated time frame. It is further noted that the agent in this case study 2 seems to have managed to increase the loading speed of the column by combining wash flow and feed flow. This resulted in a quicker loading allowing a shorter cycle time when compared to a reference case that will be described below with reference to Fig. 14. This shows that the agent in this case study 2 is capable of intelligently using the various control interfaces provided to improve productivity when compared to the constant flowrate legacy process as will be described below with reference to Fig. 14(c).

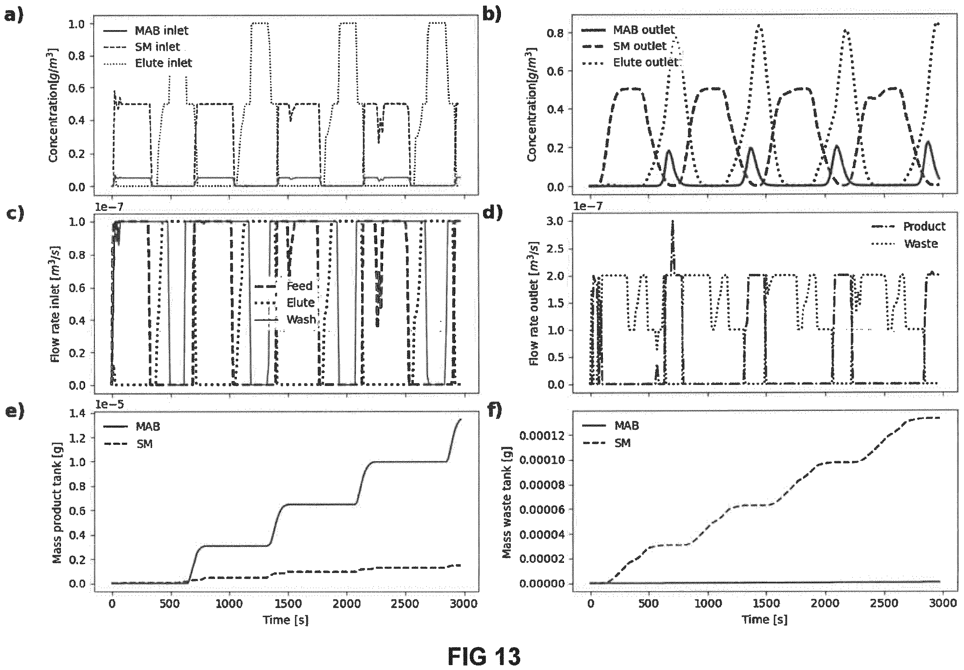

To highlight the adaptation of new columns by the RL agent, Fig. 13 shows a control process by the RL agent when the RL agent was presented with a different column than in the experiment of Fig.12. Specifically, Fig. 13 shows a control process of a simulated chromatography device by the RL agent when presented with the different column. Figs. 13(a) and 13(b) show the column inlet and outlet concentrations of mAb, spent media (SM) and elute, respectively. Fig. 13(c) shows the column inlet flowrates of feed, elute and wash, which the agent can control. Fig. 13 (d) shows the column outlet stream to either product vessel 540 or the waste vessel 542, which the agent can control by controlling the output valve 530. Figs. 13(e) and 13(f) show how much mAb and spent media end up in the product vessel 540 and the waste vessel 542, respectively.

From Fig. 13, it can be clearly seen that the agent has now generated a control scheme that only completes three (and a half) load-wash-elute cycles, in contrast to the experimental results shown in Fig. 12, where the agent has completed four cycles.

Fig. 14 shows a simulated benchmark policy for reference. In Figs. 14(a) and 14(b) show the column inlet and outlet concentrations of mAb, spent media (SM) and elute, respectively. Fig. 14(c) shows constant flowrate switches between the three stages: feed, wash and elute. Fig. 14(d) shows valve control of column outlet stream to either the product vessel 540 or the waste vessel 542. Figs. 14(e) and 14(f) show recovered mass in the product vessel 540 and the waste vessel 542, respectively. Note that the reference case with its lower flowrates only achieves three cycles in the timeframe.

This case study 2 has shown that the RL agent can learn to control and adapt to chromatography systems with variability in the column properties. This is an important finding since conventional recipes are determined experimentally per column and cannot be universally used for new columns. This deep RL workflow highlights the possibility of a universally applicable control scheme adapting to the column variability by relying on sensor data.

It is further noted that the unforeseen behavior of the agent was obtained in this case study 2, where the agent made use of flow control to increase the amount of processed product in the experiment. Accordingly, the control device according to the present disclosure may be able to autonomously adapt to a variety of conditions. Subsequent adjustments in the reward can be used to optimize for purity or recovery of product, with current reward weighting the 125% increase of productivity over the -18% decrease in purity compared to the expert policy. It may be presumed that further increases in purity is not limited by the algorithms ability to learn how to control the system, but rather the shaping of the reward function.

The results as such can be improved by further exploration of the deep learning architectures, RL algorithms, hyperparameter tuning, and probably most importantly further engineering of the reward function. Further, it may be presumed that the RL agent benefits from the stochastic column parameters.

## Variations

It should be noted that the method and/or system according to the present disclosure may be applied to controlling chromatography processes other than the specific liquid chromatography process used in the case study described above. For example, the final reward function used in the case study 1 or 2 as described above may be used also for generating policies to control liquid chromatography processes with target compounds other than the mAb in the case studies 1 and 2.

Further, for example, chromatography processes other than liquid chromatography process may also be controlled by the method and/or system according to the present disclosure. Examples of different kinds of chromatography processes may include, but are not limited to, a high pressure liquid chromatography process, a gas chromatography process, an ion exchange chromatography process, an affinity chromatography process, a membrane chromatography process, a continuous chromatography process, affinity monolith chromatography (AMC) liquid chromatography that uses a monolithic support and a biologically-related binding agent as a stationary phase, etc. When controlling different kinds of chromatography processes, state and/or control parameters other than those used in the case study or those mentioned above as exemplary state and/or control parameters may be taken into consideration. For instance, for ion exchange chromatography, salt ion concentration may be included as a state parameter and/or a control parameter. Further, for example, for affinity chromatography, pH may be included as a state parameter and/or a control parameter. Further, for high pressure liquid chromatography, in particular for anion-exchange high pressure liquid chromatography to separate mRNA/pDNA/dsRNA/ssRNA synthesis, salt gradient and pH may be included as a state parameter and/or a control parameter. For controlling a membrane chromatography, on the other hand, state and control parameters used for the case study may be used analogously.

Further, in the exemplary embodiments where the reinforcement learning or the deep reinforcement learning is used, the reward function may be different from the final reward function used in the case study described above. For example, the reward function may further include a penalty term for actions that are too different from previous actions to persuade the agent into taking smother actions (e.g., slowly adjusting a valve instead of turning it on and off again rapidly). Other factors may also be considered in the reward function, for example, the time needed to process a certain amount of feed and/or usage of a compound with specific interaction properties (e.g., the usage of the elute buffer for which less usage may be preferable due to its cost). When incorporating such other factors into the reward function, specific process measurements may be taken (e.g., in addition to the values of the state parameters as well as the amounts of substances in the product and waste vessels) and used for calculating the reward.

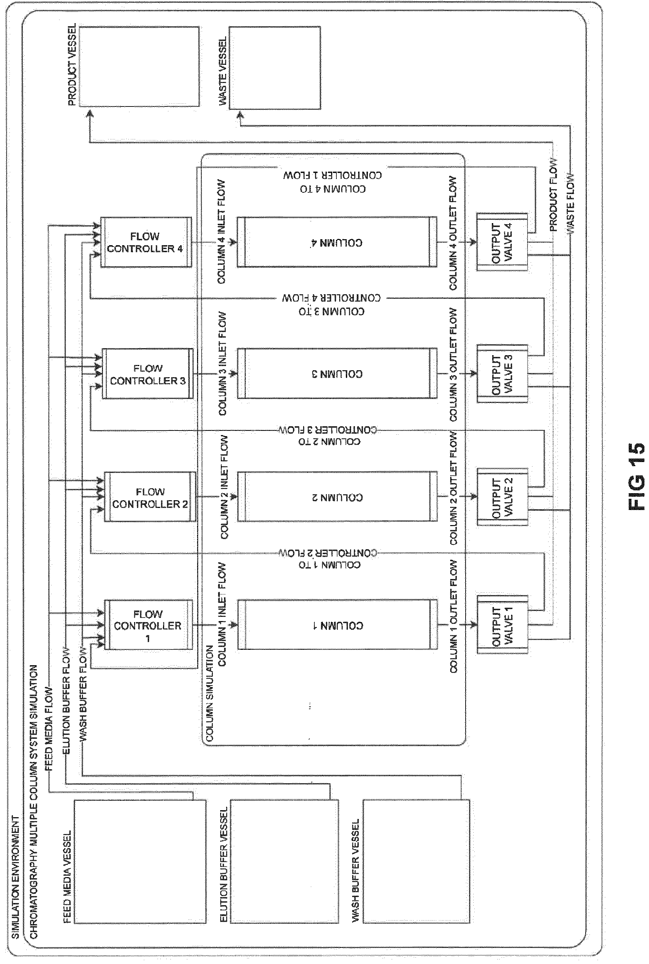

Further, although the exemplary embodiments described above concern with the exemplary simulation environment 50 shown in Fig. 2 including a single column (chromatographic bed), the method and/or system according to the present disclosure may be applied to controlling a chromatography system that may be simulated with a further exemplary simulation environment modeling multi-column chromatography. **Fig. 15** shows a schematic diagram illustrating such a further exemplary simulation environment. The exemplary simulation environment may be implemented by the processor 104 of the chromatography system 10. In the specific example shown in Fig. 15, the simulation environment comprises modules representing a column simulation including four columns (column 1, column 2, column 3 and column 4) connected to each other, four flow controllers (flow controller 1, flow controller 2, flow controller 3 and flow controller 4) respectively corresponding to the four columns, four output valves (output valve 1, output valve 2 output valve 3, output valve 4) respectively corresponding to the four columns, a feed media vessel, an elution buffer vessel, a wash buffer vessel, a product vessel and a waste vessel. A physical system (e.g., the chromatography device 102) that is recreated in the exemplary simulation environment shown in Fig. 15 may comprise physical components respectively corresponding to the modules included in the exemplary simulation environment shown in Fig. 15. The exemplary simulation environment shown in Fig. 15 or the corresponding physical system may be used for simulating or physically performing periodic counter-current chromatography, for example.

It is noted that, although not shown in Fig. 15, the simulation environment and the corresponding physical system may comprise more than one product vessel and/or more than one waste vessel in some exemplary embodiments. Moreover, although the exemplary simulation environment shown in Fig. 15 comprises four columns as well as corresponding flow controllers and corresponding output valves, in other circumstances, the simulation environment and the corresponding physical system may include more than four or less than four columns as well as corresponding flow controllers and corresponding output valves.

Further, although Fig. 1 shows a single chromatography system 10 and the case studies 1 and 2 involve a single chromatography system for training and control, the control device 20 may also control a plurality of chromatography systems 10 in some exemplary embodiments. The plurality of chromatography systems 10 may include one or more systems that physically perform the chromatography process (thus, may be referred to as "physical systems") and one or more systems that simulate the chromatography process (thus, may be referred to as "simulation system"). Some of the plurality of chromatography systems 10 may be used only for generating the policy and others may be control by the generated policy. As a specific example, among the plurality of chromatography systems 10, all of the simulation systems and at least one of the physical systems may be used for generating the policy and the physical systems not used for the policy generation may be controlled by the generated policy. As another specific example, the plurality of chromatography systems 10 may include a physical system and a simulation system that uses a simulation environment modeling the physical system (digital twin), generate the policy using the simulation system and then use the generated policy to control the physical system.

## Hardware Configuration

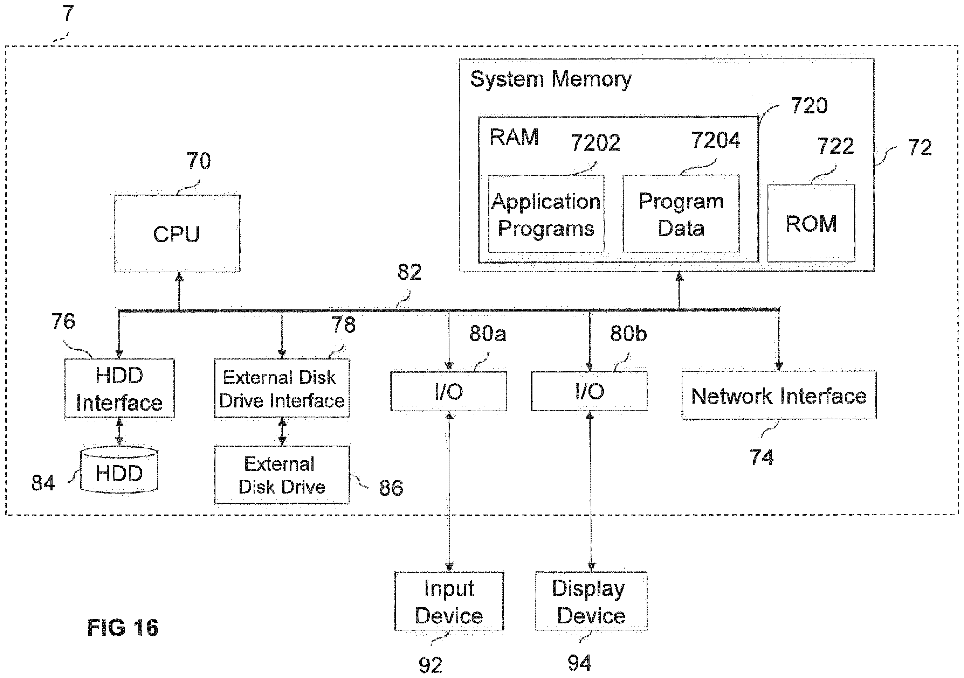

**Fig. 16** shows an exemplary hardware configuration of a computer that may be used to implement at least a part of the system as described above. For example, at least a part of the chromatography system 10 and/or the control device 20 shown in Fig. 1 may be implemented with the computer 7 shown in Fig. 16. The computer 7 shown in Fig. 16 includes a central processing unit (CPU) 70, a system memory 72, a network interface 74, a hard disk drive (HDD) interface 76, an external disk drive interface 78 and input/output (I/O) interfaces 80. These components of the computer are coupled to each other via a system bus 82. The CPU 70 may perform arithmetic, logic and/or control operations by accessing the system memory 72. The system memory 72 may store information and/or instructions for use in combination with the CPU 70. The system memory 72 may include volatile and non-volatile memory, such as a random access memory (RAM) 720 and a read only memory (ROM) 722. A basic input/output system (BIOS) containing the routines that helps to transfer information between elements within the computer 7, such as during start-up, may be stored in the ROM 722. The system bus 82 may be any of several types of bus structures including a memory bus or memory controller, a peripheral bus, and a local bus using any of a variety of bus architectures.

The computer may include a network interface 74 for communicating with other computers and/or devices via a network.

Further, the computer may include a hard disk drive (HDD) 84 for reading from and writing to a hard disk (not shown), and an external disk drive 86 for reading from or writing to a removable disk (not shown). The removable disk may be a magnetic disk for a magnetic disk drive or an optical disk such as a CD ROM for an optical disk drive. The HDD 84 and the external disk drive 86 are connected to the system bus 82 by a HDD interface 76 and an external disk drive interface 78, respectively. The drives and their associated computer-readable media provide non-volatile storage of computer-readable instructions, data structures, program modules and other data for the general purpose computer. The data structures may include relevant data for the implementation of the exemplary method and its variations as described herein. The relevant data may be organized in a database, for example a relational or object database.

Although the exemplary environment described herein employs a hard disk (not shown) and an external disk (not shown), it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM 722 or RAM 720, including an operating system (not shown), one or more application programs 7202, other program modules (not shown), and program data 7204. The application programs may include at least a part of the functionality as described above.

The computer 7 may be connected to an input device 92 such as mouse and/or keyboard and a display device 94 such as liquid crystal display, via corresponding I/O interfaces 80a and 80b as well as the system bus 82. In case the computer 7 is implemented as a tablet computer, for example, a touch panel that displays information and that receives input may be connected to the computer 7 via a corresponding I/O interface and the system bus 82. Further, in some examples, although not shown in Fig. 16, the computer 7 may further be connected to a printer and/or an imaging device such as a camera, via corresponding I/O interfaces and the system bus 82.

In addition or as an alternative to an implementation using a computer 7 as shown in Fig. 16, a part or all of the functionality of the exemplary embodiments described herein may be implemented as one or more hardware circuits. Examples of such hardware circuits may include but are not limited to: Large Scale Integration (LSI), Reduced Instruction Set Circuits (RISC), Application Specific Integrated Circuit (ASIC) and Field Programmable Gate Array (FPGA).

**Claims**

1. A computer-implemented method for controlling a chromatography system (10) that is configured to physically perform and/or simulate a chromatography process, the method comprising:

   obtaining, from the chromatography system (10), a current state of the chromatography system (10), the current state including one or more values of one or more state parameters, the one or more state parameters including one or more quantities of one or more substances present in the chromatography system (10);
   determining one or more values of one or more control parameters for the chromatography system (10) according to a policy that is configured to map the current state to a corresponding action representing the one or more values of the one or more control parameters, the one or more control parameters including at least: a position of a valve comprised in the chromatography system (10) and/or a pump speed of a pump comprised in the chromatography system (10); and
   controlling the chromatography system (10) using the one or more determined values of the one or more control parameters,
   wherein the policy is generated according to a machine learning algorithm that uses state-action pairs for training; and
   wherein the state-action pairs are obtained at least in part by physically performing and/or simulating the chromatography process by the chromatography system (10), each of the state-action pairs including:

   a state ($S_t$) of the chromatography system (10) including one or more values of the one or more state parameters at a particular point in time (t); and
   an action (At) including one or more values of the one or more control parameters, the chromatography system (10) being controlled, in response to the state (St), using the one or more values included in the action (At).

2. The method according to claim 1, further comprising:

   receiving the state-action pairs; and
   generating the policy according to the machine learning algorithm, using the received state-action pairs.

3. The method according to claim 1 or 2, further comprising:
   updating the policy using the current state and the corresponding action including the one or more determined values of the one or more control parameters.

4. The method according to any one of claims 1 to 3, wherein the one or more quantities of the one or more substances present in the chromatography system (10) include one or more of the following:

   one or more quantities of the one or more substances flowing into one or more chromatographic beds (520) comprised in the chromatography system (10);

one or more quantities of the one or more substances flowing out of the one or more chromatographic beds (520);

one or more quantities of the one or more substances within the one or more chromatographic beds (520);

one or more quantities of the one or more substances within one or more of vessels comprised in the chromatography system (10),

wherein the one or more state parameters may include at least one parameter based on two or more of the quantities listed above.

5. The method according to any one of claims 1 to 4, wherein the one or more control parameters further include one or more flow rates of one or more kinds of media flowing into and/or out of one or more of the following:

at least one of one or more chromatographic beds (520) of the chromatography system (10);

at least one of vessels comprised in the chromatography system (10);

at least one of one or more flow controllers comprised in the chromatography system (10); and

wherein the one or more control parameters may further include one or more of the following:

a temperature in the chromatography system (10);

pH of a mobile phase in the chromatography system (10);

salinity of the mobile phase in the chromatography system (10).

6. The method according to any one of claims 1 to 5, wherein the one or more state parameters further include one or more of the following:

a temperature at a specified point of the chromatography system (10);

pH of media in a specified portion of the chromatography system (10);

one or more parameters relating to specifications of the one or more chromatographic beds (520), one or more vessels (510, 512, 514, 540, 542) comprised in the chromatography system (10) and/or one or more connections between the vessels (510, 512, 514, 540, 542);

one or more maximum flow rates for one or more kinds of media that flow into the one or more chromatographic beds (520);

one or more upstream parameters;

one or more parameters relating to feed media, wash media and/or elute media used in the chromatography process;

conductivity:

absorption of effluent;

target protein content;

concentration of coeluting contaminants;

product concentration;

purity;

yield.

7. The method according to any one of claims 1 to 6, wherein the machine learning algorithm includes one of, or a combination of two or more of, the following:

reinforcement learning;

deep reinforcement learning;

supervised learning;

semi-supervised learning;

self-supervised learning;

imitation learning;

transfer learning.

8. The method according to claim 7, wherein the machine learning algorithm includes the reinforcement learning or the deep reinforcement learning; and

wherein a reward in the reinforcement learning or the deep reinforcement learning is calculated using one or more of the following:

at least one of the one or more values of the one or more state parameters;

a value representing a flow rate of the target compound flowing into one or more chromatographic beds of the chromatography system (10);

a value representing a flow rate of the target compound flowing out of one or more chromatographic beds of the chromatography system (10);

a value representing a quantity of a target compound for the chromatography process in or flowing into a product vessel (540) comprised in the chromatography system (10);

a value representing a quantity of the target compound in or flowing into a waste vessel (542) comprised in the chromatography system (10);

a value representing a quantity of spent media in or flowing into the product vessel (540), the spent media including substances other than the target compound;

a value representing a quantity of the spent media in or flowing into the waste vessel (542).

9. The method according to claim 8, wherein the machine learning algorithm includes the deep reinforcement learning involving an actor-critic method that uses:

an actor network (32) comprising a first neural network to be trained to represent the policy, the first neural network being configured to take a state as an input and an action as an output; and

a critic network (34) comprising a second neural network to be trained to estimate the reward gained by a state-action pair, the critic network (34) being used to train the actor network (32) to output an action that yield high rewards in response to a state input to the actor network (32).

10. The method according to any one of claims 7 to 9, wherein the machine learning algorithm includes the supervised learning or the semi-supervised learning; and

wherein at least a part of the state-action pairs is defined by an expert of the chromatography process.

11. The method according to any one of claims 1 to 10, wherein the chromatography system (10) comprises:

a chromatography device (102) configured to physically perform the chromatography process; and

a simulation system that is configured to simulate the chromatography process and that is implemented by a processor (104) and a storage medium (106),

wherein said controlling of the chromatography system (10) includes controlling the chromatography device (102) comprised in the chromatography system (10) using the one or more determined values of the one or more control parameters.

12. A computer-implemented method for configuring a control device (20) for controlling a chromatography system (10) that is configured to physically perform and/or simulate a chromatography process, the method comprising:

receiving state-action pairs obtained at least in part by physically performing and/or simulating the chromatography process by the chromatography system (10), each of the state-action pairs including:

a state (St) of the chromatography system (10) including one or more values of one or more state parameters at a particular point in time (t), the one or more state parameters including one or more quantities of one or more substances present in the chromatography system (10); and

an action (At) including at least one or more values of one or more control parameters for the chromatography system (10), the chromatography system (10) being controlled using the one or more values included in the action (At) in response to the state ($S_t$), the one or more control parameters including at least: a position of a valve comprised in the chromatography system (10) and/or a pump speed of a pump comprised in the chromatography system (10);

generating, according to a machine learning algorithm and using the received state-action pairs, a policy that maps a current state including one or more values of the one or more state parameters to a corresponding action including one or more values of the one or more control parameters; and

storing the generated policy in a storage medium (204) comprised in the control device (20).

13. A computer program product comprising computer-readable instructions that, when loaded and run on a computer, cause the computer to perform the method according to any one of claims 1 to 12.

14. A control device (20) for controlling a chromatography system (10) that is configured to perform and/or simulate a chromatography process, the control device (20) comprising:

a processor (202) configured to perform the method according to any one of claims 1 to 11; and
a storage medium (204) configured to store the policy.

15. A system comprising:

a chromatography system (10) that is configured to perform and/or simulate a chromatography process; and
the control device (20) according to claim 14, the control device (20) being connected to the chromatography system (10).

**FIG 1**

**FIG 2**

30

Agent

State
$\vec{S}_t$

Reward
$\vec{R}_t$

Action
$\vec{A}_t$

40

$\vec{R}_{t+1}$

Environment

$\vec{S}_{t+1}$

**FIG 3**

**FIG 4**

**FIG 5**

START

S10 ⌐ Policy generation

S12 — Obtain a current state of
the chromatography system

S14 — Determine one or more values
of one or more
control parameters

S16 — Control the chromatography
system using the one or more
determined values

S18 — End?    NO

YES

END

**FIG 6**

START

S100
Receive state-action pairs obtained
at least in part by physically
performing and/or simulating
a chromatography process

S102
Generate a policy according to
a machine learning algorithm and
using the received state-action pairs

S104
Store the generated policy
in the storage medium
of the control device

END

FIG 7

FIG 8

FIG 9

FIG 10

Pure Reward Gradient

**FIG 11**

**FIG 12**

FIG 13

FIG 14

**FIG 15**

**FIG 16**

EP 4 286 842 A1

Europäisches
Patentamt

European
Patent Office

Office européen
des brevets

# EUROPEAN SEARCH REPORT

Application Number

EP 22 17 6471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2018/339244 A1 (HUBBUCH JÜRGEN [DE] ET AL) 29 November 2018 (2018-11-29)<br>* abstract *<br>* paragraphs [0010], [0020], [0047] – [0048], [0060] – [0061], [0065]; figure 1 *<br>* paragraphs [0086] – [0088], [0112], [0140], [0153] * | 1-7, 12-15<br>3, 8-11 | INV.<br>G01N30/86<br>G06N3/00<br>G01N30/88 |
| X | US 2021/149361 A1 (JUNGBAUER ALOIS [AT] ET AL) 20 May 2021 (2021-05-20)<br>* abstract *<br>* paragraphs [0019] – [0028], [0098], [0109], [0121], [0126], [0129] – [0138], [0150] – [0154]; figures 1-2 * | 1,2,4,7, 12-15 | |
| X<br><br><br><br><br><br><br><br>Y | NIKITA SAXENA ET AL: "Reinforcement learning based optimization of process chromatography for continuous processing of biopharmaceuticals",<br>CHEMICAL ENGINEERING SCIENCE, OXFORD, GB, vol. 230, 26 September 2020 (2020-09-26), XP086398851,<br>ISSN: 0009-2509, DOI: 10.1016/J.CES.2020.116171<br>[retrieved on 2020-09-26]<br>* abstract *<br>* page 2, left-hand column, last paragraph – right-hand column, paragraph 2 *<br>* 2.3 "Reinforcement learning";<br>page 3, left-hand column; figures 1-2 *<br>* section 3.2 "Method";<br>page 4 * | 1-15<br><br><br><br><br><br><br><br>3, 8-11 | TECHNICAL FIELDS SEARCHED (IPC)<br><br>G06N<br>G01N |

The present search report has been drawn up for all claims

| Place of search | Date of completion of the search | Examiner |
|---|---|---|
| Munich | 8 November 2022 | Meltaus, Johanna |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 17 6471

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2022

| Patent document cited in search report | | Publication date | Patent family member(s) | | Publication date |
|---|---|---|---|---|---|
| US 2018339244 | A1 | 29-11-2018 | EP | 3173782 A1 | 31-05-2017 |
| | | | EP | 3243073 A1 | 15-11-2017 |
| | | | US | 2018339244 A1 | 29-11-2018 |
| | | | WO | 2017088979 A1 | 01-06-2017 |
| US 2021149361 | A1 | 20-05-2021 | AU | 2017248025 A1 | 25-10-2018 |
| | | | CA | 3019979 A1 | 12-10-2017 |
| | | | CN | 109313419 A | 05-02-2019 |
| | | | EP | 3440518 A1 | 13-02-2019 |
| | | | JP | 6953508 B2 | 27-10-2021 |
| | | | JP | 2019522802 A | 15-08-2019 |
| | | | KR | 20180134942 A | 19-12-2018 |
| | | | SG | 10202009671U A | 27-11-2020 |
| | | | SG | 11201808401Q A | 30-10-2018 |
| | | | US | 2021149361 A1 | 20-05-2021 |
| | | | WO | 2017174580 A1 | 12-10-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GUIOCHON et al.** Fundamentals of Preparative and Nonlinear Chromatography. Elsevier, 10 February 2006
- **LEWEKE et al.** Chromatography Analysis and Design Toolkit (CADET). *Chemical Engineering,* 2018, vol. 113, 274-294, https://cadet.github.io/v4.3.0/modelling/unit_operations/general_rate_model.html
- **YOUNG.** Orthogonal collocation revisited. *Computer Methods in Applied Mechanics and Engineering,* 01 March 2019, vol. 345, 1033-1076, https://doi.org/10.1016/j.cma.2018.10.019
- **FUJIMOTO et al.** Addressing Function Approximation Error in Actor-Critic Methods. *Proceedings of the 35th International Conference on Machine Learning, Stockholm, Sweden, PMLR 80,* 2018, https://arxiv.org/abs/1802.09477
- **LILLICRAP et al.** *Continuous Control with Deep Reinforcement Learning,* https://arxiv.org/abs/1509.02971
- **MNIH et al.** Playing Atari With Deep Reinforcement Learning. *NIPS Deep Learning Workshop,* 2013, https://arxiv.org/abs/1312.5602
- **KINGMA et al.** Adam: A Method for Stochastic Optimization. *3rd International Conference for Learning Representations, San Diego,* 2015, https://arxiv.org/abs/1412.6980
- **KARLSSON et al.** Model-based optimization of a preparative ion-exchange step for antibody purification. *Journal of Chromatography A,* 05 November 2004, vol. 1055 (1-2), 29-39, https://doi.org/10.1016/j.chroma.2004.08.151